# EUROPEAN PATENT APPLICATION

(11) **EP 4 749 403 A1**
(43) Date of publication of application: **27.05.2026**
(21) Application number: 24854488.4
(22) Date of filing: 16.08.2024
(51) Int. Cl.: G06F 3/01, G06F 3/04842, G06F 3/0481, G06F 1/16, G06F 3/00

(54) **ELECTRONIC DEVICE, METHOD, AND NON-TRANSITORY STORAGE MEDIUM FOR MANAGING PLURALITY OF WINDOWS OF VIRTUAL SCREEN IN VIRTUAL REALITY SPACE**

(30) Priority: 17.08.2023 KR 20230107874; 23.11.2023 KR 20230164822
(71) Applicant: Samsung Electronics Co., Ltd., Suwon-si, Gyeonggi-do 16677 (KR)
(72) Inventor: SEO, Hoyoung, Suwon-si Gyeonggi-do 16677 (KR); KIM, Sungman, Suwon-si Gyeonggi-do 16677 (KR); SHIN, Boosun, Suwon-si Gyeonggi-do 16677 (KR); LEE, Chaekyung, Suwon-si Gyeonggi-do 16677 (KR); KIM, Hyun, Suwon-si Gyeonggi-do 16677 (KR)
(74) Representative: Nederlandsch Octrooibureau
(86) International application number: PCT/KR2024/012235
(87) International publication number: WO 2025/037937

(57) **Abstract**

The present disclosure relates to an electronic device, a method, and a non-transitory storage medium for managing a plurality of windows of a virtual screen in a virtual space. According to an embodiment, the electronic device may comprise: a display; a memory including instructions; and at least one processor including the display and a processing circuit, wherein the instructions are configured to, when executed individually or collectively by the at least one processor, cause the electronic device to control the display to display a virtual screen in a virtual reality space, and on the basis of an arrangement condition configured using user context information, control the display to display a plurality of windows of at least one application on the virtual screen without overlapping between the plurality of windows. Another embodiment is also possible.

## Description

### [Technical Field]

The disclosure relates to an electronic device, a method, and a non-transitory storage medium for managing a plurality of windows of a virtual screen in a virtual reality space.

### [Background Art]

Electronic devices have been provided in various forms, such as a smartphone, a tablet personal computer (tablet PC), or a personal digital assistant (PDA), together with the advancement of digital technology. Electronic devices are also being developed in a form wearable by a user to enhance the portability and accessibility for the user.

Electronic devices developed in a form wearable by a user may be developed in the form of wearable electronic devices, such as augmented reality (AR) glasses, a video see-through (VST) device, and a head mounted display (HMD) device, to provide a virtual space in a virtual environment, and various services and additional functions provided by the wearable electronic devices are gradually increasing. To increase the utility value of such electronic devices and to satisfy the various needs of users, communication service providers or electronic device manufacturers are competitively developing electronic devices to provide various functions and to differentiate themselves from other companies. Accordingly, various functions provided through wearable electronic devices are becoming increasingly advanced.

AR glasses or a VST device may display a virtual image in a state of being worn by a user, thereby providing the user with an immersive experience. AR glasses or a VST device may replace the usability of a smartphone in various fields such as game entertainment, education, and social networking services (SNS). The user may receive content similar to reality through the AR glasses or the VST device and may feel as if staying in a virtual world through interaction.

The above-described information may be provided as related art for the purpose of assisting in understanding the disclosure. No assertion or determination is made as to whether any of the above-described content may be applied as prior art related to the disclosure.

### [Detailed Description of the Invention]

### [Technical Solution]

According to an embodiment of the disclosure, an electronic device may include a display, memory configured to include instructions, and at least one processor configured to include processing circuitry.

According to an embodiment, the instructions, when executed by the at least one processor individually or collectively, may cause the electronic device to control the display to display a virtual screen in a virtual reality space.

According to an embodiment, the instructions, when executed by the at least one processor individually or collectively, may cause the electronic device to execute a plurality of windows of at least one application and select a first window among the plurality of windows based on user context information.

According to an embodiment, the instructions, when executed by the at least one processor individually or collectively, may cause the electronic device to, based on an arrangement condition configured using the user context information, control the display to arrange and display the selected first window in a specified area on the virtual screen, and arrange and display other windows among the plurality of windows without overlapping with the first window in a remaining area of the virtual screen.

According to an embodiment, an operation method of an electronic device may include controlling the display to display a virtual screen in a virtual reality space.

According to an embodiment, the operation method of the electronic device may include executing a plurality of windows of at least one application and selecting a first window among the plurality of windows based on user context information.

According to an embodiment, the operation method of the electronic device may include, based on an arrangement condition configured using the user context information, arranging and displaying the selected first window in a specified area on the virtual screen, and arranging and displaying other windows among the plurality of windows without overlapping with the first window in a remaining area of the virtual screen.

According to an embodiment, in a non-transitory storage medium storing at least one program, the at least one program, when executed by at least one processor of an electronic device, may include instructions cause the electronic device to control the display of the electronic device to display a virtual screen in a virtual reality space, execute a plurality of windows of at least one application and select a first window among the plurality of windows based on user context information, and arrange and display the selected first window in a specified area on the virtual screen and display the plurality of windows on the virtual screen without overlapping between the plurality of windows of the at least one application based on an arrangement condition configured using the user context information.

### [Brief Description of Drawings]

FIG. 1 is a block diagram illustrating an electronic device in a network environment according to various embodiments.
FIG. 2 is a diagram illustrating the configuration of a wearable electronic device according to an embodiment.
FIGS. 3A, 3B, and 3C are diagrams illustrating the front and back of a wearable electronic device according to an embodiment.
FIG. 4 is a diagram illustrating the configuration of an electronic device according to an embodiment.
FIG. 5 is a diagram illustrating an example of displaying a plurality of windows of a virtual screen in a virtual reality space in an electronic device according to an embodiment.
FIG. 6 is a diagram illustrating an example of displaying a plurality of windows of a virtual screen in a virtual reality space in an electronic device according to an embodiment.
FIGS. 7A, 7B, and 7C are diagrams illustrating examples of displaying a plurality of windows of a virtual screen in a virtual reality space in an electronic device according to an embodiment.
FIGS. 8A and 8B are diagrams illustrating examples for changing the arrangement of a plurality of windows in an electronic device according to an embodiment.
FIG. 9 is a diagram illustrating an example for arranging windows based on a user's gaze in an electronic device according to an embodiment.
FIG. 10 is a diagram illustrating an example for arranging windows based on a user's gaze in an electronic device according to an embodiment.
FIG. 11 is a diagram illustrating an example for executing multiple virtual screens in an electronic device according to an embodiment.
FIG. 12 is a diagram illustrating an example of an operation method of an electronic device according to an embodiment.
FIGS. 13A, 13B, and 13C are diagrams illustrating examples for changing the arrangement of windows in an electronic device according to an embodiment.
FIGS. 14A, 14B, and 14C are diagrams illustrating examples for changing the arrangement of windows in an electronic device according to an embodiment.
FIGS. 15A and 15B are diagrams illustrating examples for changing the arrangement of windows in an electronic device according to an embodiment.
FIG. 16 is a diagram illustrating an example for executing multiple virtual screens in an electronic device according to an embodiment.
FIG. 17 is a diagram illustrating an example for executing multiple virtual screens in an electronic device according to an embodiment.
FIGS. 18A, 18B, and 18C are diagrams illustrating examples for executing multiple virtual screens in an electronic device according to an embodiment.
FIGS. 19A, 19B, and 19C are diagrams illustrating examples for managing a plurality of windows in an electronic device according to an embodiment.

With regard to the description of the drawings, the same or similar reference numerals may be used to refer to the same or similar elements.

### [Mode for Carrying out the Invention]

Hereinafter, embodiments of the disclosure will be described in detail with reference to the accompanying drawings so that those skilled in the art may easily implement the embodiments. However, the disclosure may be embodied in various forms, and thus is not limited to the embodiments described herein. In the description of the drawings, the same or similar reference numerals may be used to refer to the same or similar elements. Moreover, a description of well-known functions and configurations may be omitted for the sake of clarity and conciseness in the drawings and related descriptions. As used in an embodiment of the disclosure, the term "user" may refer to a person who uses an electronic device or a device (e.g., an artificial intelligence electronic device) that uses an electronic device.

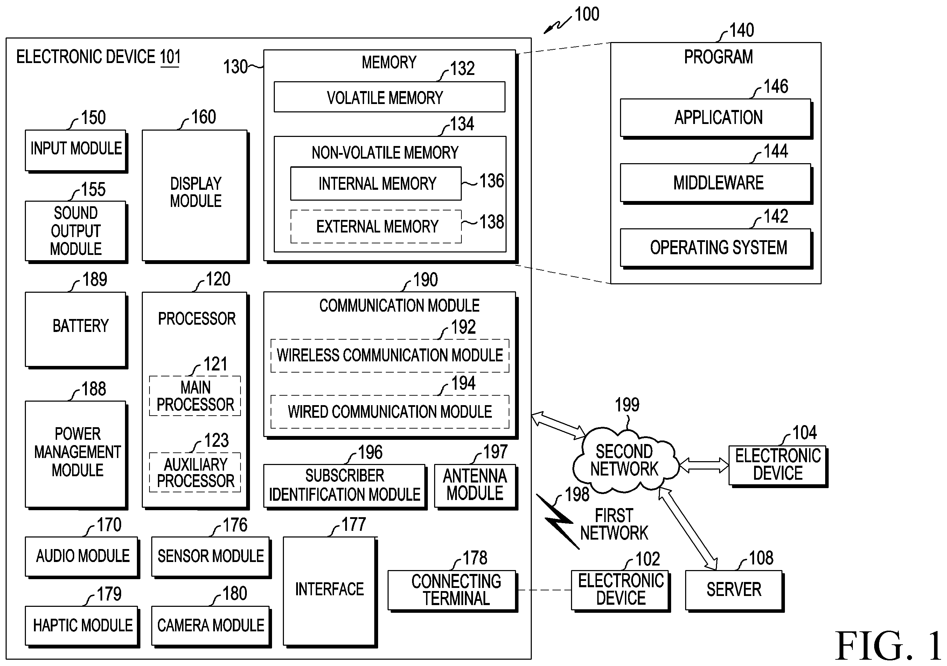

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing 1eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

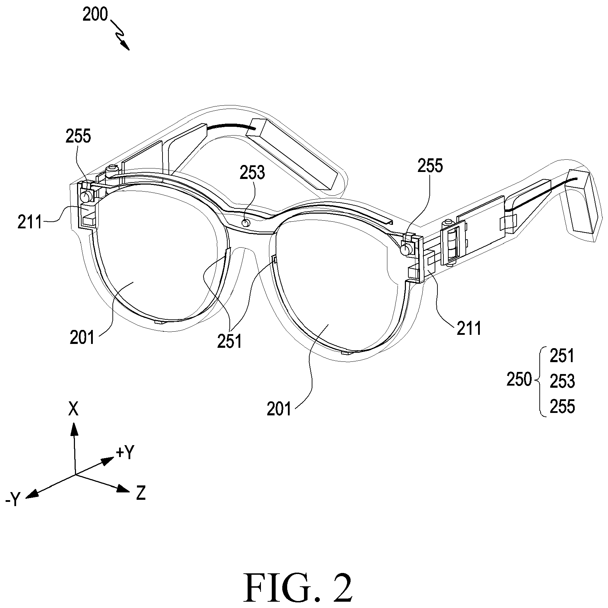

FIG. 2 is a diagram illustrating the configuration of a wearable electronic device according to an embodiment.

Referring to FIG. 2, a wearable electronic device 200 according to an embodiment of the disclosure may include at least one of an optical output module 211, a display member 201, and a camera module 250.

According to an embodiment of the disclosure, the optical output module 211 may include a light source capable of outputting an image and a lens that guides the image to the display member 201. According to an embodiment of the disclosure, the optical output module 211 may include at least one of a liquid crystal display (LCD), a digital mirror device (DMD), a liquid crystal on silicon (LCoS), an organic light emitting diode (OLED), or a micro light emitting diode (micro LED).

According to an embodiment of the disclosure, the display member 201 may include an optical waveguide (e.g., a waveguide). According to an embodiment of the disclosure, an image output from the optical output module 211 incident on one end of the optical waveguide may propagate inside the optical waveguide and may be provided to a user. According to an embodiment of the disclosure, the optical waveguide may include at least one of a diffractive element (e.g., a diffractive optical element (DOE) or a holographic optical element (HOE)) or a reflective element (e.g., a reflective mirror). For example, the light guide may use at least one diffractive element or reflective element to guide the image output from the optical output module 211 to a user's eye.

According to an embodiment of the disclosure, the camera module 250 may capture a still image and/or a moving image. According to an embodiment, the camera module 250 may be disposed in a lens frame and may be disposed around the display member 201.

According to an embodiment of the disclosure, a first camera module 251 may capture and/or recognize an eye (e.g., a pupil or iris) of a user or a trajectory of a gaze of the user. According to an embodiment of the disclosure, the first camera module 251 may periodically or aperiodically transmit information (e.g., trajectory information) related to the trajectory of a user's eye or gaze to a processor (e.g., the processor 120 of FIG. 1).

According to an embodiment of the disclosure, a second camera module 253 may capture an external image.

According to an embodiment of the disclosure, a third camera module 255 may be used for hand detection and tracking and user gesture (e.g., hand motion) recognition. The third camera module 255 according to an embodiment of the disclosure may be used for head tracking of 3 degrees of freedom (3DoF) or 6DoF, position (space, environment) recognition, and/or movement recognition. The second camera module 253 may be used for hand detection and tracking, and gesture recognition of a user according to an embodiment of the disclosure. According to an embodiment of the disclosure, at least one of the first to third camera modules 251 to 255 may be replaced with a sensor module (e.g., a LiDAR sensor). For example, the sensor module may include at least one of a vertical cavity surface emitting laser (VCSEL), an infrared sensor, and/or a photodiode.

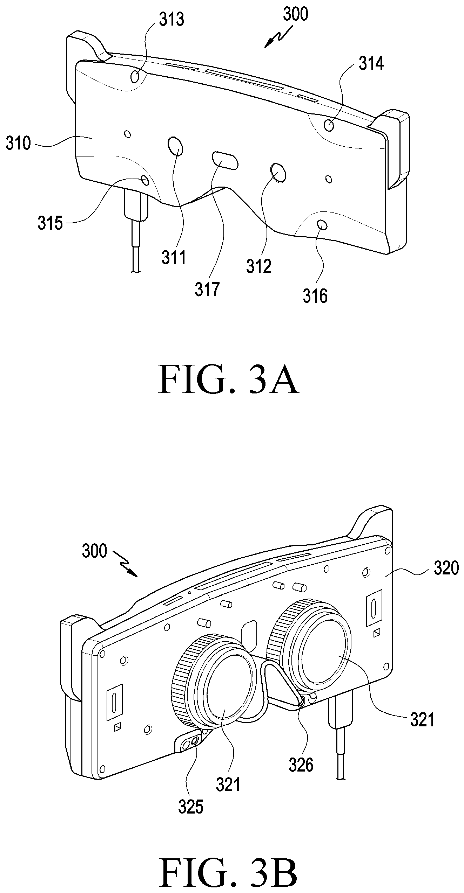

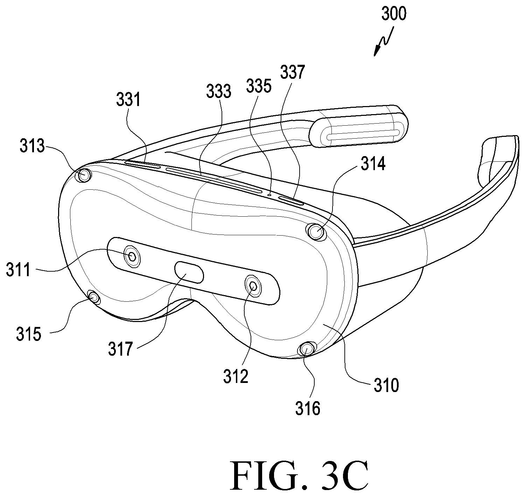

FIGS. 3A and 3C are diagrams illustrating the front and back of a wearable electronic device according to an embodiment.

Referring to FIGS. 3A and 3B, in an embodiment, camera modules 311, 312, 313, 314, 315, and 316 and/or a depth sensor 317 for obtaining information related to the surrounding environment of a wearable device 300 may be disposed on a first surface 310 of the housing.

In an embodiment, camera modules 311 and 312 may obtain an image related to the surrounding environment of the wearable device.

In an embodiment, the camera modules 313, 314, 315, and 316 may obtain an image while the wearable device is worn by a user. The camera modules 313, 314, 315, and 316 may be used for hand detection, tracking, and gesture recognition of a user (e.g., hand motion). The camera modules 313, 314, 315, and 316 may be used for head tracking of 3DoF or 6DoF, position (space, environment) recognition, and/or movement recognition. In an embodiment, the camera modules 311 and 312 may be used for hand detection and tracking and detecting a user's gesture.

In an embodiment, the depth sensor 317 may be configured to transmit a signal and receive a signal reflected from a subject, and may be used to identify the distance to an object, such as time of flight (TOF). Instead of or in addition to the depth sensor 217, the camera modules 313, 314, 315, and 316 may identify the distance to an object.

According to an embodiment, face recognition camera modules 325 and 326 and/or a display 321 (and/or a lens) may be disposed on a second surface 320 of the housing.

In an embodiment, the face recognition camera modules 325 and 326 adjacent to the display may be used for recognizing a user's face or may recognize and/or track both eyes of the user.

In an embodiment, the display 321 (and/or a lens) may be disposed on the second surface 320 of the wearable device 300. In an embodiment, the wearable device 300 may not include the camera modules 315 and 316 among a plurality of camera modules 313, 314, 315, and 316. Although not illustrated in FIGS. 3A and 3B, the wearable device 300 may further include at least one of the configurations illustrated in FIG. 2.

Referring to FIG. 3C, the wearable electronic device 300 according to an embodiment may have a form factor (e.g., a head-mounted display (HMD)) to be worn on a user's head. The wearable electronic device 300 may further include a strap and/or a wearing member for fixing the wearable electronic device 300 to a part of the user's body. The wearable electronic device 300 may include a volume button 331, a ventilation hole 333, a state indicator 335, and a power button (e.g., including a fingerprint sensor) 317, and this configuration may also be similarly included in the wearable electronic device 300 illustrated in FIGS. 3A and 3B. While worn on the user's head, a user experience based on augmented reality, virtual reality, and/or extended reality (or mixed reality) may be provided. The wearable electronic device 300 configured in the form of an HMD may include the same or similar configurations as the configurations of FIGS. 3A and 3B.

In the above-described FIG. 1, FIG. 2A, FIG. 2B, FIG. 3A, FIG. 3B, and FIG. 3C, the terms such as "~ module" in the electronic devices 101, 200, and 300 refer to a unit that processes at least one function or operation, and may be implemented as hardware, software, or a combination of hardware and software. In an electronic device, although it is described as a "module," the term may be alternatively replaced with, for example, "~ circuitry," "~ unit," or "~ device."

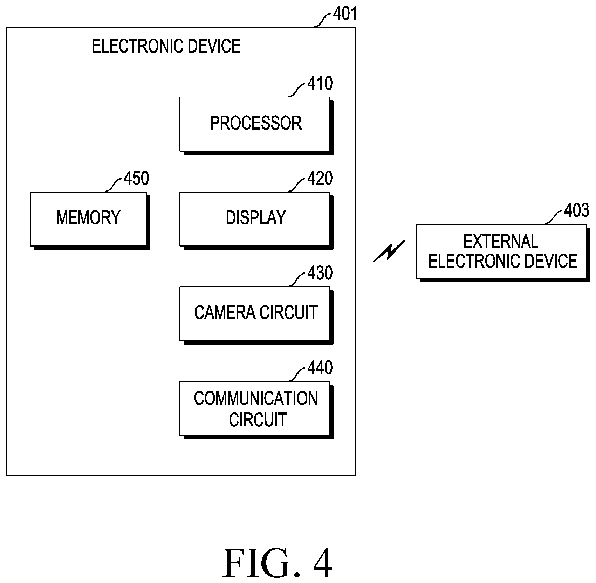

FIG. 4 is a diagram illustrating the configuration of an electronic device according to an embodiment. The terms such as "~ circuitry" in the electronic device of FIG. 4 refer to a unit that processes at least one function or operation, and may be implemented as hardware, software, or a combination of hardware and software. In an electronic device, although it is described as a "module," the term may be alternatively replaced with, for example, "~ module," "~ unit," or "~ device."

Referring to FIG. 4, an electronic device 401 (e.g., the electronic device 101 of FIG. 1, the wearable electronic device 200 of FIG. 2, and/or the wearable electronic device 300 of FIGS. 3A and 3C) according to an embodiment may include a processor 410 (e.g., the processor 120 of FIG. 1), a display 420 (e.g., the display module 160 of FIG. 1, the optical output module 211, and the display member 201 of FIG. 2, and the display 321 of FIGS. 3A to 3C), a camera circuit 430 (e.g., the camera module 180 of FIG. 1, the camera module 250 of FIG. 2, and the camera modules 311, 312, 313, 314, 315, and 316 of FIGS. 3A to 3C), a communication circuit 440 (e.g., the communication module 190 of FIG. 1), and memory 450 (e.g., the memory 130 of FIG. 1). Without being limited thereto, the electronic device 401 may further include other components illustrated in FIG. 1.

The electronic device 401 according to an embodiment may be connected to an external electronic device 403 (e.g., a PC, a mobile device, a laptop, or an input interface (e.g., a keyboard)) by using a specified communication method (e.g., BLE communication) by the communication circuit 440. The electronic device 401 according to an embodiment may be connected to at least one controller (e.g., a handler) through a specified communication method (e.g., BLE communication). Here, the at least one controller may be a pointing device or an input controller, and may transmit a user interaction related to a virtual object displayed in a virtual reality space to the electronic device 401. Without being limited thereto, the input interface for transmitting a user interaction to the electronic device 401 may be replaced with at least one of a keyboard, a mouse, an electronic pen, a smartphone, or an artificial intelligence (AI) device.

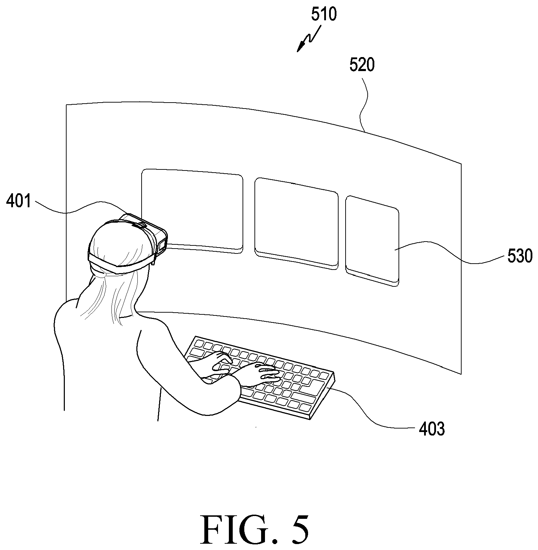

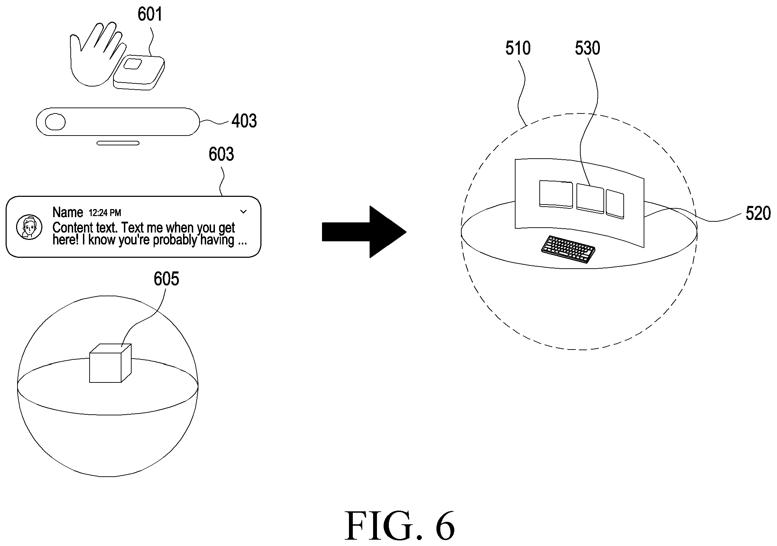

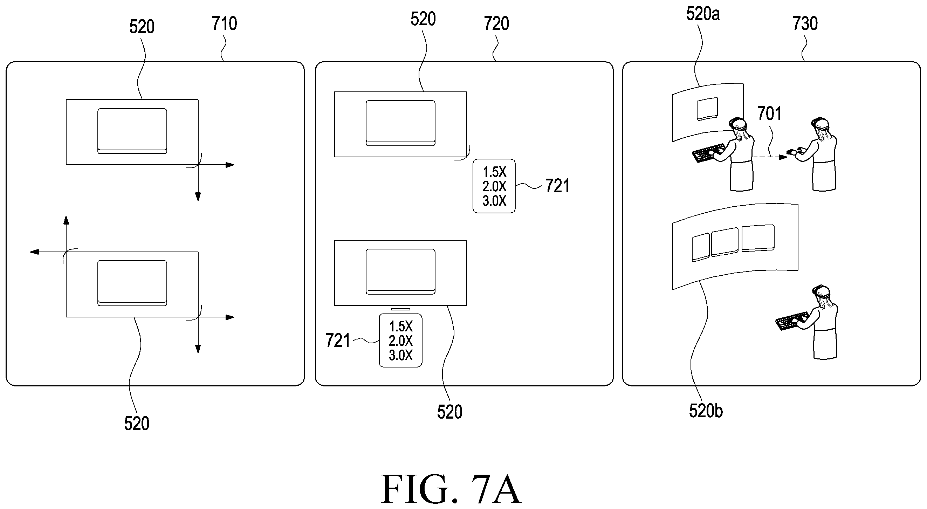

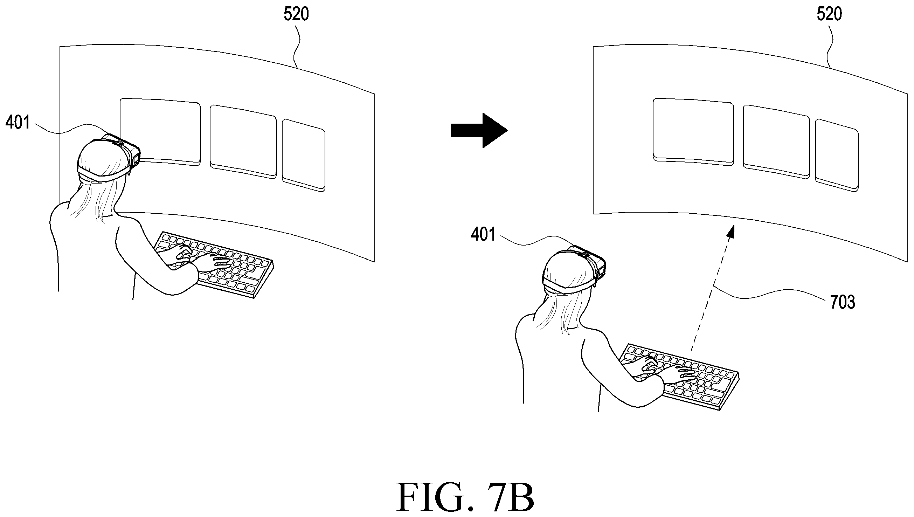

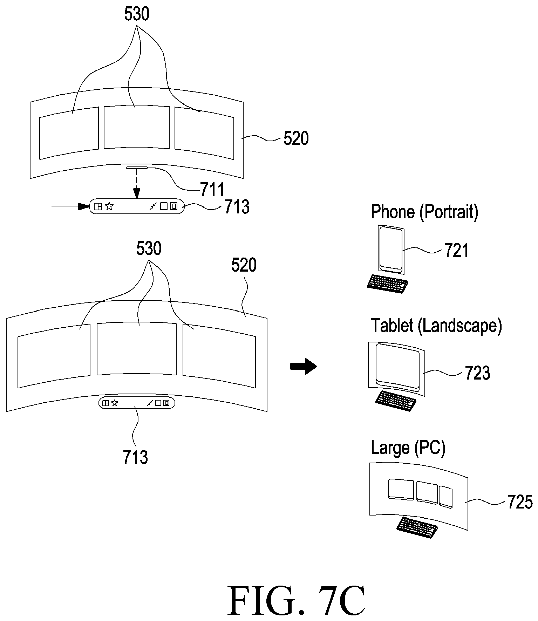

FIG. 5 is a diagram illustrating an example of displaying a plurality of windows of a virtual screen in a virtual reality space in an electronic device according to an embodiment, FIG. 6 is a diagram illustrating an example of displaying a plurality of windows of a virtual screen in a virtual reality space in an electronic device according to an embodiment, and FIGS. 7A, 7B, and 7C are diagrams illustrating examples of displaying a plurality of windows of a virtual screen in a virtual reality space in an electronic device according to an embodiment.

Referring to FIG. 4, FIG. 5, FIG. 6, FIG. 7A, FIG. 7B, and FIG. 7C, according to an embodiment, the processor 410 of the electronic device 401 may control the display 420 to display a virtual screen 520 in a virtual reality space 510 in a virtual reality (e.g., XR) environment. The virtual reality space 510 may display the virtual screen 520 having a larger size than a real environment. According to an embodiment, the processor 410 may display the virtual screen 520 when a specified interaction (e.g., an interaction with a user's gesture or a menu input, an interaction with the occurrence of content or a notification event 603, or an interaction with a selection of an object 605 displayed in the virtual reality space 510) for a user interaction target (e.g., an external input device) 601 occurs, while the user is wearing the electronic device 401 on a part (e.g., head) of the body. According to an embodiment, the processor 410 may control the display 420 to display one or more windows (e.g., execution screens) 530 related to at least one application executed by the electronic device 401 or the external electronic device 403 on the virtual screen 520 (or, on a specific area to which the user's gaze is facing in the virtual reality space 510 when the virtual screen 520 is not displayed). According to an embodiment, when multiple applications are executed, the processor 410 may control the display 420 to display one or more windows related to each of the multiple applications in an area on the virtual screen 520 or in a virtual reality space. According to an embodiment, the processor 410 may display the applications separately or in mapping for each of the multiple applications. For example, the processor 410 may display one or more windows of an application currently used by a user on the virtual screen 520 and control the display 420 to display the remaining applications being executed in an area of the virtual reality space. For example, the processor 410 may control the display 420 to display one or more windows of the application currently used by the user at a position in the virtual reality space 510 or on the virtual screen 520 to which the user's gaze is facing, and to display the remaining applications being executed at other positions in the virtual reality space 510 or on the virtual screen 520 to which the user's gaze is not facing. For example, the processor 410 may arrange, in the Z direction, one or more windows mapped or separated for each of the multiple applications, and may control the display 420 to display the same in an area (e.g., an area on the virtual screen 520 or an area in the virtual reality space 510) corresponding to the user's gaze range.

According to an embodiment, when displaying the plurality of windows 530 on the virtual screen 520, the processor 401 may configure an arrangement condition such that the plurality of windows 530 are displayed without overlapping (e.g., without interference). Here, the arrangement condition may be a condition for configuring the size, arrangement position, or arrangement interval of the plurality of windows 530, based on the user context information or the execution state information of the virtual screen 520 stored in the memory 450. According to an embodiment, the processor 410 may display the entire plurality of windows 530 on the virtual screen by adjusting their arrangement positions and/or arrangement intervals based on the arrangement condition, ensuring they do not overlap. According to an embodiment, the processor 410 may control the display 420 to display windows 530 displayed within the user's field of view on the virtual screen by adjusting the arrangement position and/or arrangement interval so that they do not overlap, based on the arrangement condition. Here, a part of windows outside the field of view may be displayed to overlap, and when the user turns his or her head and the user's field of view is changed, the processor 410 may control the display 420 to change the arrangement of the overlapping windows 530 displayed in the changed field of view so that the windows are displayed without overlapping. According to an embodiment, the processor 410 may arrange portions of windows 530 that are far from the user's gaze or are located far from a specified area of the virtual screen or from the user's field of view to be overlapped. According to an embodiment, the processor 410 may arrange the windows 530 in the left/right or up/down positions, based on the arrangement condition with reference to the specified area of the virtual screen, and the windows 530 arranged in the edge area of the virtual screen 520 may be arranged to overlap with each other. According to an embodiment, when portions of the plurality of windows 530 are arranged to overlap on the virtual screen, the processor 410 may remove some overlapping windows and not display them on the virtual screen 520, and display objects corresponding to some of the removed windows in the virtual reality space 510. Here, the specified area may be a central area of the virtual screen 520 specified based on a user's field of view when a user wearing the electronic device 401 stares straight ahead.

According to an embodiment, when displaying the virtual screen 520, the processor 410 may change (or adjust) at least one of the size, distance, or type of the virtual screen 520. According to an embodiment, as shown in 710 of FIG. 7A, the processor 410 may allow a user to directly adjust (e.g., expand or reduce) the size of the virtual screen 520, based on a part (e.g., a corner) of the virtual screen 520. As shown in 720 of FIG. 7A, the processor 410 may adjust the size of the virtual screen 520 by selecting one of the specified magnifications (e.g., 1.5X, 2.0X, and 3.0X) through a user interface (UI) 721. As shown in 730 of FIG. 7A, the processor 410 may automatically adjust the size of the virtual screen 520 in proportion to a distance 701 from the virtual screen to the user. For example, when the user's distance 701 is smaller than the specified distance (e.g., close) from the virtual screen, the processor 410 may reduce the size of the virtual screen 520. For example, when the user's distance 701 is larger than the specified distance (e.g., far) from the virtual screen, the processor 410 may enlarge the size of the virtual screen 520. The processor 410 may automatically adjust the size of the virtual screen to one of the specified magnification rates, based on the size or type of one or more windows last executed before displaying the virtual screen. For example, when the number of previously executed windows is one, the processor 410 may not adjust the size of the virtual screen, and may display the one window in a specified area (e.g., the central area) of the virtual screen. For example, the processor 410 may automatically adjust the size of the virtual screen displayed in the specified size to one of the specified magnification rates, based on the total size of the one or more windows last executed previously.

According to an embodiment, when displaying the virtual screen 520, as shown in FIG. 7B, the processor 410 may display the virtual screen 520 by changing a distance 703 between the user and the virtual screen. For example, the processor 410 may adjust the distance 703 to bring the virtual screen closer to or away from the user based on the Z-axis of the virtual reality space.

According to an embodiment, as shown in FIG. 7C, the processor 410 may change the type 721, 723, or 725 of the virtual screen based on the type of the external electronic device 403 to be linked. When the external electronic device 403 to be linked is, for example, a mobile phone, the processor 410 may change the type to the first type 721, display the virtual screen in the size configured in the first type 721, adjust the size of a first window among the plurality of windows 530 to display the same on the virtual screen, erase the remaining windows, then display a second window among the remaining windows on the virtual screen according to a request for arrangement change or movement, and erase the first window. When the external electronic device 403 to be linked is, for example, a tablet, the processor 410 may change the type to the second type 723, display the virtual screen in the size configured in the second type 723, display the first window among the plurality of windows 530 on the virtual screen, erase the remaining windows, then display the second window among the remaining windows on the virtual screen according to a request for arrangement change or movement, and erase the first window. When the external electronic device 403 to be linked is, for example, a PC, the processor 410 may change the type to the third type 725, display the virtual screen in the size configured in the third type 725, and display the plurality of windows 530 on the virtual screen.

According to an embodiment, the processor 410 may control the display 420 to display an object 711 for type change on an adjacent area of the virtual screen 520, and when the object 711 is selected, to display an extended object 713 including contextual menus. When a user selects one of the contextual menus displayed in the extended object 713, the processor 410 may change the type of the virtual screen 520 corresponding to the selected menu.

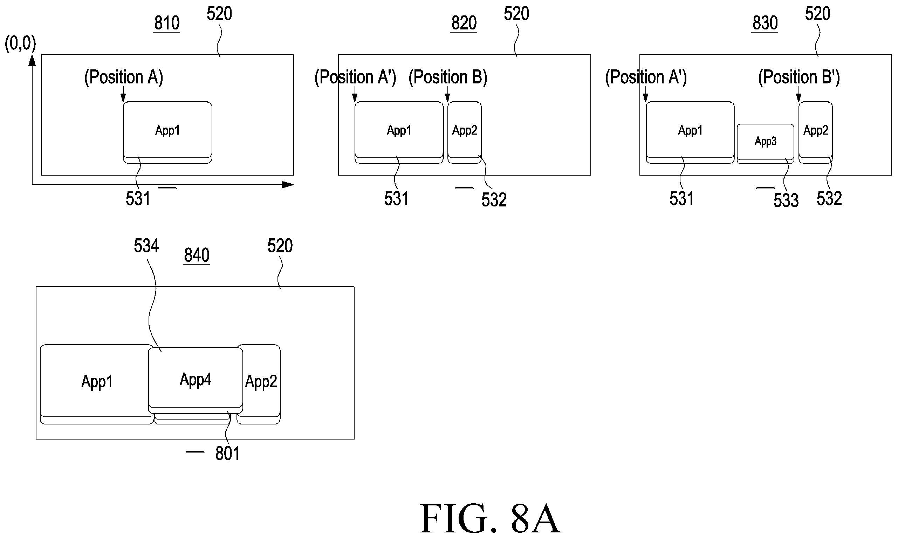

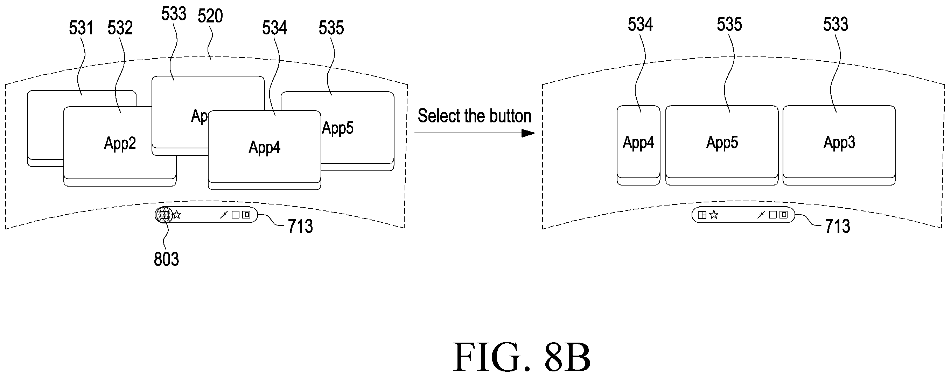

FIGS. 8A and 8B are diagrams illustrating examples for changing the arrangement of a plurality of windows in an electronic device according to an embodiment.

Referring to FIG. 8A, according to an embodiment, the processor 410 may display one or more windows 531, 532, and 533 of an application executed based on a horizontal width of the virtual screen 520 on the virtual screen 520, based on the user context information. Here, the user context information may include at least one of a user's gaze information, information on a distance to the virtual screen, user movement information, user input information (e.g., voice, text, and/or gesture input), frequently used pattern information (e.g., a window arrangement pattern or a virtual screen arrangement pattern), or information on an external electronic device (e.g., an external electronic device connected to the electronic device) used by the user. For example, when a new first window 531 is executed (810) in a state where there is no displayed window when displaying the virtual screen, the processor 410 may control the display 420 to display the first window 531 in a specified area (e.g., a central area based on a centerline). When another second window 532 is executed (820) in a state where the first window 531 is displayed, the processor 410 may control the display 420 to change the arrangement between the first window 531 and the second window 532 without interference (e.g., so as not to overlap), move the first window 531 to another area (e.g., toward the left) outside the central area according to the changed arrangement, and display the second window 532 in the central area. When a new third window 533 is executed (830) in a state where the first window 531 and the second window 532 are displayed, the processor 410 may control the display 420 to change the arrangement of the first window 531, the second window 532, and the third window 533 without interference (e.g., so as not to overlap), move the second window 532 to another area (e.g., toward the right) outside the central area according to the changed arrangement, and display the third window 533 in the central area. When a new fourth window 534 is executed (840) in a state where the first window 531, the second window 532, and the third window 533 are displayed, the processor 410 may control the display 420 to identify whether there is an empty area in which a plurality of windows 531, 532, and 533 displayed based on the size (e.g., horizontal) of the virtual screen and the newly executed fourth window 534 may be displayed without interference (e.g., in a non-overlapping state), and if there is an empty area, change the arrangement of the plurality of windows 531, 532, and 533 in the empty area without interference, move and display some of the plurality of windows 531, 532, and 533 in the empty area (e.g., in the direction of the empty area), and display the fourth window 534 in the central area. When there is no empty area in which the fourth window 534 may be displayed without interference (e.g., in a non-overlapping state), the processor 410 may display the fourth window 534 such that the toolbar 801 of the third window 533 displayed in the central area is not hidden (e.g., not overlapped), based on offsets of the fourth window 534 and the third window 533. For example, when there is no empty area in the horizontal direction and there is an empty area of a size corresponding to or similar to the size of the fourth window 534 in the vertical direction, the processor 410 may control the display 420 to move the third window 533 to the identified empty area so that the third window 533 currently displayed in the central area is arranged in the empty area identified based on the vertical axis. If the size of the identified empty area based on the vertical axis is larger than a threshold value compared to the size of the fourth window 534, the processor 410 may control the display 420 to move the plurality of displayed windows 531, 532, and 533 in a direction opposite to the empty area, secure the size of the empty area corresponding to the size of the fourth window 534, and display the fourth window 534 in the empty area.

Referring to FIG. 8B, according to an embodiment, the processor 410 may automatically arrange the plurality of windows 531, 532, 533, 534, and 535 being executed on the virtual screen 520. According to an embodiment, when a first context menu (e.g., a button, graphic, or function) 803 included in the extended object 713 is selected, the processor 410 may automatically arrange the windows 534, 533, and 535 in the order of most recently executed so that there is no interference between the windows 534, 533, and 535 based on the width of the virtual screen, and the remaining windows 531 and 532 that are not arranged (e.g., cause interference) may be deleted (e.g., provided in a minimized state) without terminating execution. Here, the windows 534, 533, and 535 may be arranged in the order of the most recently executed one, based on a central area (e.g., in the order of the central area, the left area, and the right area). The processor 410 may display an object representing the windows 531 and 532 that may be displayed again on the virtual screen according to a specified context or event in a portion of the virtual screen or in the menu screen 803 displayed in an adjacent area of the virtual screen. When a user changes his/her gaze (e.g., field of view (FoV)) to a specific window (e.g., the window (app5) 535) on an automatically arranged virtual screen and maintains the gaze for a specified period of time, the processor 410 may change the arrangement position or arrangement order of the windows 534, 533, and 535 by changing the arrangement position to a central area (e.g., the area between the windows 533 and 534). The processor 410 may display the windows 534, 533, and 535 according to the changed arrangement position or arrangement order.

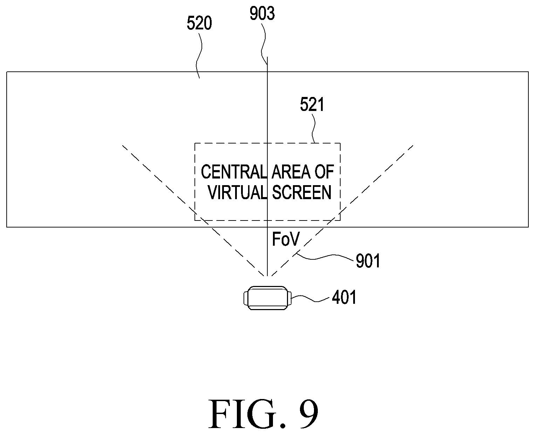

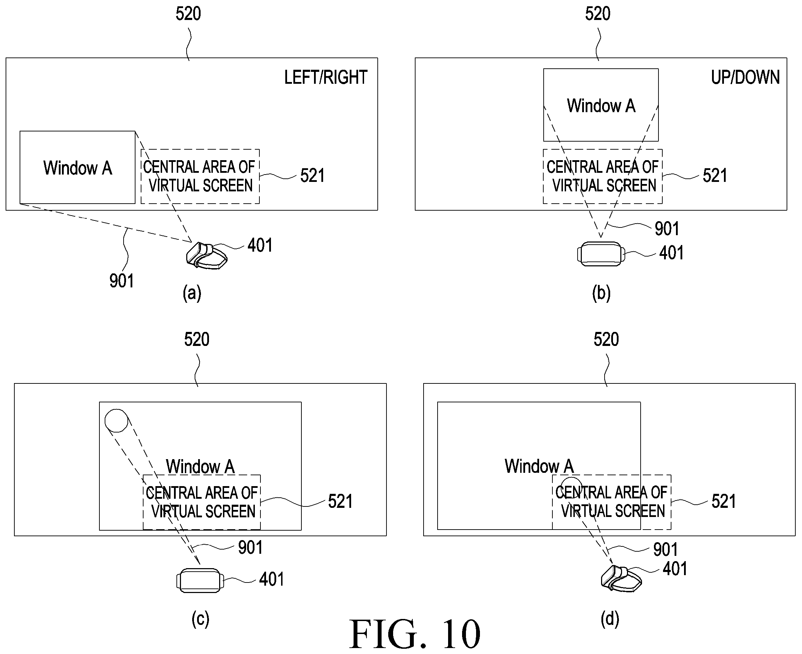

FIG. 9 is a diagram illustrating an example for arranging windows based on a user's gaze in an electronic device according to an embodiment. FIG. 10 is a diagram illustrating an example for arranging windows based on a user's gaze in an electronic device according to an embodiment.

Referring to FIGS. 9 and 10, according to an embodiment, the processor 410 may track the gaze (e.g., field of view (FoV)) 901 of a user wearing the electronic device 401 while displaying the plurality of windows 530 on the virtual screen 520 and identify the gaze position in the tracked gaze 901. When the user's gaze 901 is changed from the central area 521 of the virtual screen to another position based on the centerline 903 and gazes for a specified time, the processor 410 may change the arrangement position (e.g., arrangement order) or the arrangement interval of a window displayed in the changed gaze position.

According to an embodiment, as shown FIGA. 10 and 10B, if the position of the virtual screen 520 toward which the electronic device 401 is directed changes to a position (e.g., left/right/up/down) outside the central area 521 (e.g., the user turns his/her head to the left or raises it upward), and the user's gaze 901 leaves the central area 521, the processor 410 may identify a state in which a change in the arrangement of windows is required, identify a gaze position where the current user's gaze 901 is maintained for a specified period of time, and identify a window (window A) displayed at the identified gaze position. The processor 410 may change the arrangement position such that the identified window (window A) is displayed in the central area 521, and may change the arrangement position such that the window (window A) displayed in the central area 521 is displayed in another area. In this case, when another window exists on the virtual screen 520 and a change on the arrangement position of the other window is required, the processor 410 may change the arrangement position of the other window according to the arrangement condition.

According to an embodiment, as shown FIG. 10C, if the position of the virtual screen 520 toward which the electronic device 401 is directed is central area 521 and the user's gaze 901 moves outside the central area 521, the processor 410 may identify whether the window displayed at the gaze position where the user's current gaze 901 is maintained for a specified period of time is outside the central area 521. If the window (window A) is in a position outside the central area 521, the processor 410 may identify that the arrangement of the windows needs to be changed, and may change the arrangement position so that the window is displayed in the central area 521. If window A is included in the central area 521, the arrangement position of the window A may not be changed. According to an embodiment, as shown FIG. 10D, if the position of the virtual screen 520 toward which the electronic device 401 is directed changes up/down/left/right, but the user's gaze 901 does not leave the central area 521, the processor 410 may identify a state in which there is no need to change the arrangement of windows.

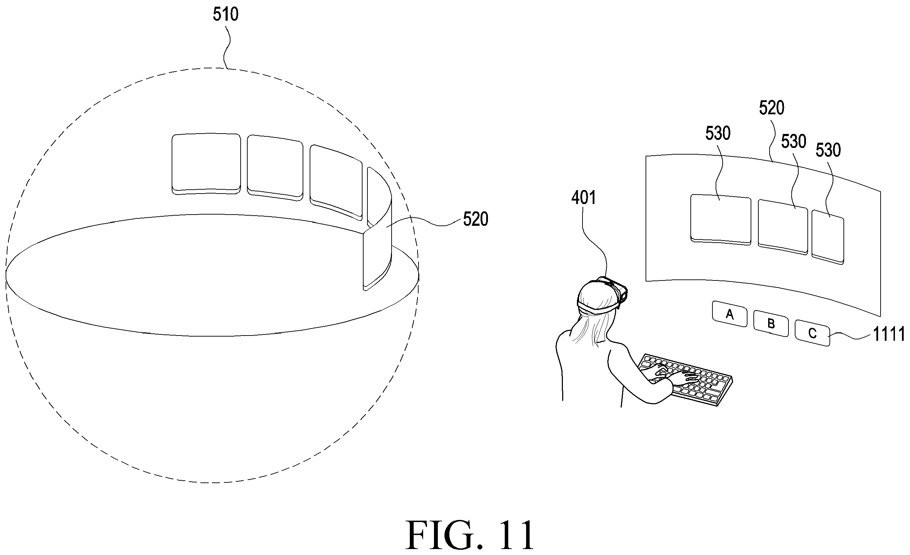

FIG. 11 is a diagram illustrating an example for executing multiple virtual screens in an electronic device according to an embodiment.

Referring to FIG. 11, in case of executing multiple virtual screens, the processor 410 of the electronic device 401 (e.g., the electronic device 101 of FIG. 1, the electronic device 202 of FIG. 2, the wearable electronic device 300 of FIGS. 3A to 3C, or the electronic device 401 of FIG. 4) according to an embodiment may control the display 420 to display the multiple virtual screens 520 executed in the virtual reality space 510. The processor 410 may display multiple virtual screens 520 within a field of view (FoV) of the user, and may arrange a virtual screen executed in another space area outside the field of view of the user. Here, the field of view may be a range of a virtual reality space in which a user wearing the electronic device 401 does not find it inconvenient to move the user's head up/down or left/right, based on the user's field of view. The electronic device 401 may display the virtual screen 520 used by a user at a central position (e.g., a position corresponding to the user's forward-facing view) of the virtual reality space 510. The processor 410 may control the display 420 to display the plurality of windows 530 being executed on the virtual screen 520. According to an embodiment, the processor 410 may arrange the plurality of virtual screens 520 in the virtual reality space 510, based on at least one of a specified arrangement criterion, a recent execution order, or user context information.

According to an embodiment, the processor 410 may control the display 420 to display a user interface 1111 including objects (A, B, C, ...) representing each of the plurality of virtual screens 520 in the virtual reality space 510. The processor 410 may control the display 420 to display a selected virtual screen at a central position viewed by the user by moving input objects (A, B, C, ...) (e.g., a menu, a button, a graphic object, or an input interface) 1111 representing each of the plurality of virtual screens 520.

In the above descriptions of FIG. 5 to FIG. 11, it has been described that the virtual screen 520 is displayed in a virtual reality space, but the disclosure is not limited thereto, and in another embodiment, a virtual screen (e.g., an object or an image corresponding to a virtual screen) may not be displayed (e.g., provided), and a plurality of windows (e.g., objects) may be displayed in the virtual reality space.

In an embodiment, while the virtual windows 530 are displayed on the virtual screen 520 (or in the virtual reality space 510), the processor 410 of the electronic device 401 (e.g., the electronic device 101 of FIG. 1, the wearable electronic device 200 of FIG. 2, and/or the wearable electronic device 300 of FIGS. 3A and 3C) may arrange or change the arrangement of the virtual windows 530 by a specific button (e.g., a menu, a function, a graphic element, or an object) provided in the virtual reality space 510 or a specific input from an external electronic device without selecting at least one window or an object corresponding to at least one window among the virtual windows 530. When a specific button or a specific input is received, the electronic device 401 may arrange or change the arrangement of the virtual windows 530 under a different arrangement condition than in the case of selecting a window or an object corresponding to the window. As an example, when a specific button or a specific input is received, the processor 410 may arrange the virtual windows 530 with intervals between the virtual windows 530 in the Z-axis direction based on the user's gaze. Here, the intervals between the virtual windows 530 may be configured to be constant with a specified distance value, or may be configured to different distance values. For example, the processor 410 may configure the interval from wide interval to narrow interval or from narrow interval to wide interval from the window arranged at the front based on the user's gaze. For example, the processor 410 may change a distance value of a specific window (e.g., a window in which a notification or an alert has occurred) to a larger distance value than the distance value configured for the remaining windows, and may arrange the windows with a widened interval. Without being limited thereto, the interval may be variously configured. According to an embodiment, when at least one of the virtual windows 530 arranged in the Z-axis direction based on the gaze is selected, the processor 410 may adjust (e.g., reflect or configure) intervals between the remaining windows in the Z direction, based on a Z-axis direction distance value (e.g., a predetermined distance value or a distance value adjusted by a user interaction) configured for the at least one selected window.

An electronic device (e.g., the electronic device 101 of FIG. 1, the electronic device 202 of FIG. 2, the wearable electronic device 300 of FIGS. 3A to 3C, or the electronic device 401 of FIG. 4) according to an embodiment may implement a software module (e.g., the program 140 of FIG. 1) for managing a plurality of windows executed on a virtual screen. The memory (e.g., the memory 130 of FIG. 1 and the memory 450 of FIG. 4) of the electronic device may store instructions for implementing the software module illustrated in FIG. 2. The at least one processor may execute instructions stored in the memory to implement the software module, and may control hardware (e.g., the sensor module 176, the camera module 180, or the communication module 190 of FIG. 1) related to a function of the software module.

A software module of an electronic device according to an embodiment may be configured to include a kernel (or HAL), a framework (e.g., the middleware 144 of FIG. 1), and an application (e.g., the application 146 of FIG. 1). At least a part of the software module may be preloaded on the electronic device, or may be downloadable from a server (e.g., the server 108). The components of the software module according to an embodiment and the names of the components may vary depending on the type of the operating system. According to an embodiment, at least a part of the software module may be implemented as software, firmware, hardware, or a combination of at least two thereof. At least a part of the software module may be implemented (e.g., executed) by a processor (e.g., an application processor (AP)). The at least a part of the software module may include, for example, a module, a program, a routine, a set of instructions, or a process for performing at least one function.

As such, in an embodiment, main components of an electronic device has been described through the above-described electronic device (e.g., the electronic device 101 of FIG. 1, the electronic device 202 of FIG. 2, the wearable electronic device 300 of FIGS. 3A to 3C, or the electronic device 401 of FIG. 4). However, in various embodiments, not all of the components shown in FIGS. 1 to 4 are essential, and an electronic device may be implemented with more components than those shown, or with fewer components than those shown. In addition, the positions of the main components of the electronic device described above through FIGS. 1 to 4 may be changed according to various embodiments.

According to an embodiment, an electronic device (e.g., the electronic device 101 of FIG. 1, the electronic device 202 of FIG. 2, the wearable electronic device 300 of FIGS. 3A to 3C, or the electronic device 401 of FIG. 4) may include a display (e.g., the display module 160 of FIG. 1, the display member 201 of FIG. 2, the display 321 of FIG. 3B, or the display 420 of FIG. 4), memory (e.g., the memory 130 of FIG. 1 or the memory 450 of FIG. 4) configured to include instructions, and at least one processor (e.g., the processor 120 of FIG. 1 or the processor 410 of FIG. 4) configured to include processing circuitry.

According to an embodiment, the instructions, when executed by the at least one processor individually or collectively, may cause the electronic device to control the display to display a virtual screen in a virtual reality space.

According to an embodiment, the instructions, when executed by the at least one processor individually or collectively, may cause the electronic device to execute a plurality of windows of at least one application and select a first window among the plurality of windows based on user context information.

According to an embodiment, the instructions, when executed by the at least one processor, may cause the electronic device to, based on an arrangement condition configured using the user context information, control the display to arrange and display the selected first window in a specified area on the virtual screen, and arrange and display other windows among the plurality of windows without overlapping with the first window in a remaining area of the virtual screen.

According to an embodiment, the instructions, when executed by the at least one processor individually or collectively, may cause the electronic device to change at least one of a size of the virtual screen, a distance between the user and the virtual screen, or a type of the virtual screen.

According to an embodiment, the arrangement condition may be a condition for configuring a size, an arrangement position, or an arrangement interval of the plurality of windows based on the user context information or execution state information of the virtual screen stored in the memory.

According to an embodiment, the user context information may include at least one of gaze information, distance information, motion information, user input information, frequently used pattern information, or information of a connected external electronic device.

According to an embodiment, the specified area may be a central area of the virtual screen that is specified based on a field of view of the user when the user wearing the electronic device gazes forward.

According to an embodiment, the instructions, when executed by the at least one processor individually or collectively, may cause the electronic device to, while displaying the plurality of windows on the virtual screen, based on a new application being executed, arrange a new window of the new application in the central area of the virtual screen, and change an arrangement of the plurality of windows so as to display the plurality of windows without interference with the new window.

4 According to an embodiment, the instructions, when executed by the at least one processor individually or collectively, may cause the electronic device to track a gaze of a user using at least one camera circuit (e.g., the camera module 251 of FIG. 2 or the camera circuit 430 of FIG. 4) of the electronic device, identify a gaze position on the virtual screen, and, based on the gaze position being outside the central area of the virtual screen, change an arrangement position of a first window, among the plurality of windows, displayed at the gaze position to the central area.

According to an embodiment, the instructions, when executed by the at least one processor individually or collectively, may cause the electronic device to, based on the gaze being maintained in another area outside the central area for a specified time, control the display to display an object for moving the first window displayed at the gaze position to the central area.

According to an embodiment, the instructions, when executed by the at least one processor individually or collectively, may cause the electronic device to, based on the gaze moving after selecting one of the plurality of windows, display an area of the virtual screen corresponding to the moved gaze position as a movable area of the selected window, change arrangement positions of the plurality of windows to move the selected window to the movable area, and, based on the changed arrangement positions of the plurality of windows, control the display to display the selected window in the central area.

According to an embodiment, the instructions, when executed by the at least one processor individually or collectively, may cause the electronic device to, in response to a request to terminate the virtual screen, store execution state information of the virtual screen in the memory.

According to an embodiment, the execution state information may include at least one of a size, a distance or a type of the virtual screen and at least one of sizes, arrangement positions, arrangement intervals of the plurality of windows or identification information of applications corresponding to the plurality of windows.

According to an embodiment, the instructions, when executed by the at least one processor individually or collectively, may cause the electronic device to, in response to a request for re-execution of the virtual screen, obtain the execution state information from the memory and, based on the execution state information, re-execute the virtual screen and control the display to display the plurality of windows.

According to an embodiment, the instructions, when executed by the at least one processor individually or collectively, may cause the electronic device to, based on displaying the plurality of virtual screens in the virtual reality space, control the display to display virtual screen objects representing each of the plurality of virtual screens in the virtual reality space, control the display to display a first virtual screen, among the plurality of virtual screens, displayed at a gaze position toward which the gaze of the user is directed, at a central position in the virtual reality space and, when displaying the first virtual screen at the central position, change an arrangement of the plurality of virtual screens to display the plurality of virtual screens without overlapping.

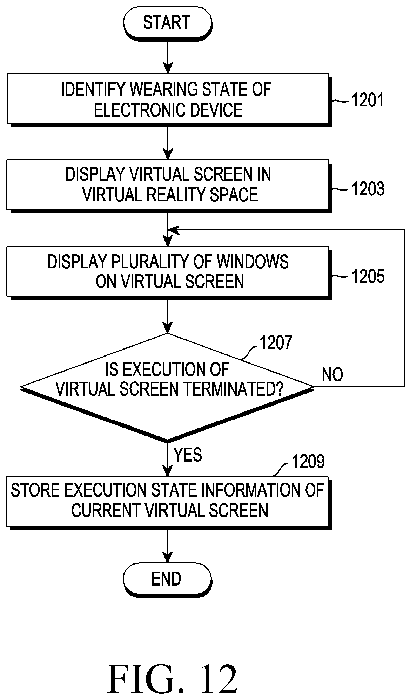

FIG. 12 is a diagram illustrating an example of an operation method of an electronic device according to an embodiment. In the following embodiments, each operation may be performed sequentially, but is not necessarily performed sequentially. For example, the order of the respective operations may be changed, and at least two operations may be performed in parallel.

Referring to FIG. 12, in operation 1201, an electronic device (e.g., the electronic device 101 of FIG. 1, the electronic device 202 of FIG. 2, the wearable electronic device 300 of FIGS. 3A to 3C, or the electronic device 401 of FIG. 4) according to an embodiment may identify a user's wearing state of the electronic device.

In operation 1203, the electronic device may display a virtual screen in a virtual reality space in a virtual reality environment, based on identifying that the user is wearing the electronic device. The electronic device may display the virtual screen based on execution information (e.g., size, distance, or type) of a virtual screen previously configured or of a virtual screen specified as a default. The electronic device may change the size, distance, or type of the virtual screen based on a direct operation of the user or user context information. Here, the user context information may include at least one of a user's gaze information, information on a distance to the virtual screen, user movement information, user input information (e.g., voice, text, and/or gesture input), frequently used pattern information (e.g., a window arrangement pattern or a virtual screen arrangement pattern), or information on an external electronic device (e.g., an external electronic device connected to the electronic device) used by the user. Without being limited thereto, the electronic device according to an embodiment may not display (e.g., provide) a virtual screen (e.g., an object or an image corresponding to the virtual screen), but may display a plurality of windows (e.g., objects) in a virtual reality space, and in this case, operation 1205 may be omitted.

In operation 1205, the electronic device may display, on the virtual screen, a plurality of windows of at least one application without interference (e.g., so as not to overlap), based on an arrangement condition configured according to the user context information. The electronic device may display the plurality of windows arranged based on the arrangement condition on the virtual screen, based on the centerline. According to an embodiment, the electronic device may display multiple recently executed windows in their previously arranged condition. According to an embodiment, when the electronic device displays the plurality of windows as at least one new window is executed in a state where there is a window displayed on a virtual screen, the electronic device may display the plurality of windows by arranging the plurality of windows according to the arrangement condition. According to an embodiment, when the electronic device displays one window on the virtual screen, the one window may be displayed in the central area without being based the arrangement condition. Here, the arrangement condition may be configured (e.g., customized) according to a user context. The arrangement condition may be a condition for configuring the size, arrangement position, or arrangement interval of the plurality of windows, based on the user context information or execution state information of the virtual screen stored in memory (e.g., the memory 130 of FIG. 1 or the memory 450 of FIG. 4).

In operation 1207, the electronic device may identify whether execution of the virtual screen is terminated. As a result of identification, when the execution of the virtual screen is terminated, the electronic device may perform operation 1209, and when the execution of the virtual screen is not terminated, the electronic device may perform operation 1205.

In operation 1209, based on termination of the virtual screen, the electronic device may store execution state information of the current virtual screen in memory and terminate the operation. Here, the execution state information of the virtual screen may include at least one of the size, distance, or type of the virtual screen, and at least one of the sizes, arrangement positions, arrangement intervals, or identification information of applications corresponding to the plurality of windows.

In the above-described operation method of FIG. 12, an operation of identifying whether an arrangement change of the plurality of windows is required may be further performed. For example, the electronic device may identify whether an arrangement change of the plurality of windows is required when performing operation 1205, or before operation 1207 after performing operation 1205.

According to an embodiment, the electronic device may identify whether an arrangement change of the plurality of windows is required based on user context information. A state in which an arrangement change of the plurality of windows is required may include at least one of the following states: a state in which the user's gaze shifts away from the central area of the virtual screen and gazes at another area for a specified period of time without moving the electronic device (e.g., without turning the head); a state in which an object for window movement displayed on the virtual screen is selected; a state in which one of the plurality of windows is selected by a handler or a user gesture; and a state in which a new window is executed or some of the plurality of windows are terminated.

According to an embodiment, when an arrangement change of the plurality of windows is required, the electronic device may identify a window to be displayed in the central area, configure the arrangement position to the central area so that the identified window is displayed in the central area, switch other windows currently displayed in the central area to the arrangement position of the identified window, or change the arrangement positions of other windows other than the identified windows based on the arrangement criterion.

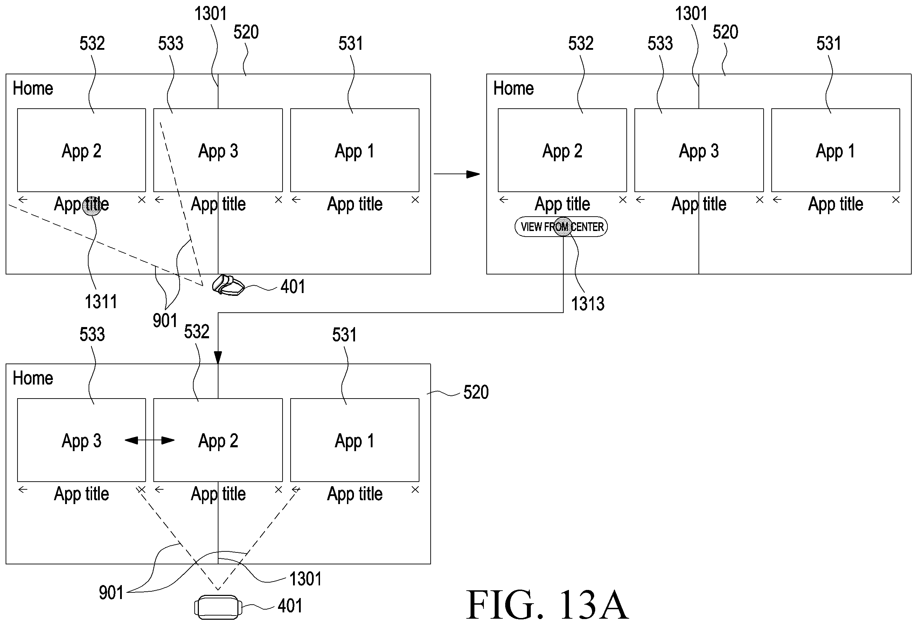

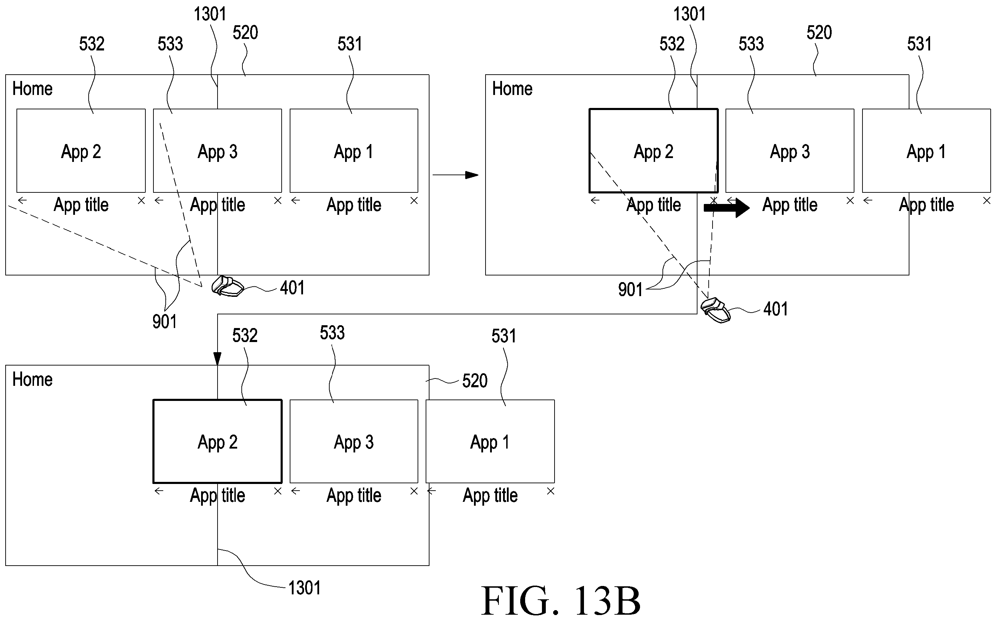

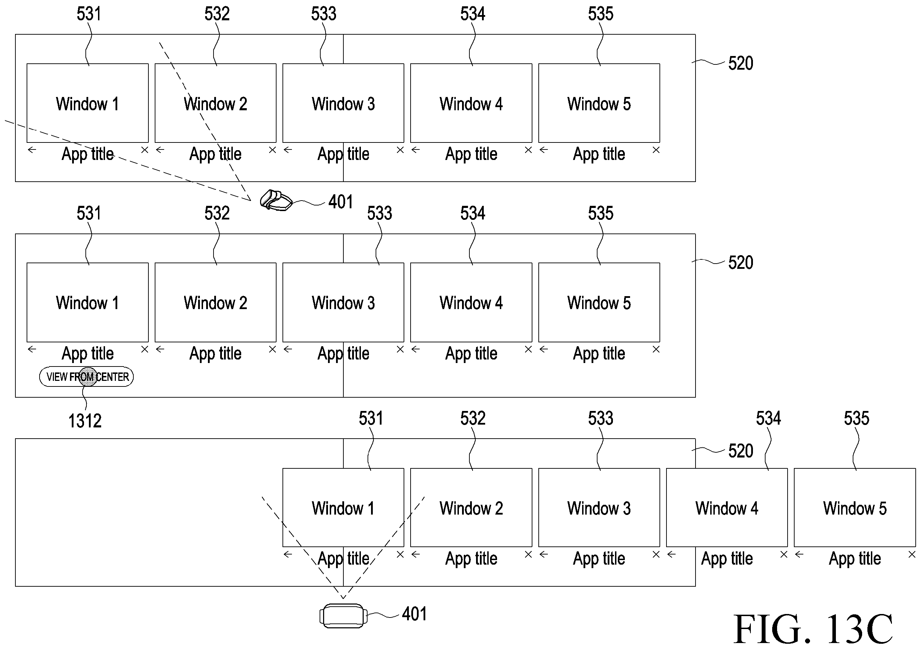

FIGS. 13A, 13B, and 13C are diagrams illustrating examples for changing the arrangement of windows in an electronic device according to an embodiment.

Referring to FIGS. 13A, 13B, and 13C, if the user's gaze (e.g., field of view (FoV)) 901 is maintained at a gaze position 1311 outside the central area configured based on the centerline 1301 for a specified period of time while the plurality of windows 531, 532, and 533 are displayed on the virtual screen 520 without interference (e.g., so as not to overlap), as shown in operation 1205 of FIG. 12, the electronic device 401 (e.g., the electronic device 101 of FIG. 1, the electronic device 202 of FIG. 2, the wearable electronic device 300 of FIGS. 3A to 3C, or the electronic device 401 of FIG. 4) according to an embodiment may identify the second window 532 at the gaze position 1311 where the gaze 901 is maintained, and change the arrangement position of the identified second window 532 to a central area.

According to an embodiment, as shown in FIG. 13A, if the user's gaze 901 is maintained at the gaze position 1311 outside the central area for a specified period of time, the electronic device 401 may display an object (e.g., a menu, a graphic element, or a function) 1313 for automatically arranging a window in a specified area (e.g., a central area) at the gaze position 1311 where the gaze 901 is maintained (e.g., an adjacent area of the second window 532). When the object 1313 is selected by a user, the electronic device 401 may change the arrangement positions of the second window 532 and the third window 533 displayed in the central area, move the second window 532 to the central area of the virtual screen based on the changed arrangement positions and display the same, and display the third window 533 in the area (e.g., a left area) of the virtual screen where the second window 532 is displayed.

According to an embodiment, as shown in FIG. 13B, if the user's gaze 901 is maintained at the gaze position 1311 outside the central area for a specified period of time, the electronic device 401 may identify the second window 532 displayed at the position where the gaze 901 is maintained, and without changing the arrangement of a plurality of windows currently displayed on the virtual screen 520, display all windows (e.g., the first window 531 and the third window 533) arranged in the direction of the centerline 1301 based on the second window 532 so that the second window 532 is displayed in the central area, moving in the direction of the centerline 1301 (e.g., to the right direction) according to the movement of the gaze 901. According to an embodiment, when a moved partial window (e.g., the first window 531) is out of the range of the virtual screen 520, the electronic device 401 may delete (e.g., switch to a minimized state) the partial window, and again display an object (e.g., a menu, a graphic element, or a function), in the virtual reality space, for requesting display on the virtual screen 520. According to an embodiment, the electronic device 401 may display a window (e.g., the first window 531) that is outside the range of the virtual screen 520 in an empty area (e.g., s left area) generated by the movement. In this case, the electronic device 401 may change (e.g., to the left of the second window 532) the arrangement position of the window (e.g., the first window 531).

According to an embodiment, as shown in FIG. 13C, if the user's gaze 901 is maintained at the gaze position 1311 outside the central area for a specified period of time, the electronic device 401 may identify the first window 531 displayed at the position where the gaze 901 is maintained, and may display an object 1312 for automatically arranging the window in a specified area (e.g., the central area). When the object 1312 is selected by the user, without changing the arrangement of a plurality of windows currently displayed on the virtual screen 520, the electronic device 401 may display all windows (e.g., the first window 532 to the fifth window 535) arranged in the direction of the centerline 1301 based on the first window 532 so that the first window 531 is displayed in the central area, moving in the direction of the centerline 1301 (e.g., to the right direction) according to the movement of the gaze 901. According to an embodiment, when moved partial windows (e.g., the fourth window 534 and the fifth window 535) are out of the range of the virtual screen 520, the electronic device 401 may delete (e.g., switch to a minimized state) the partial window, and again display an object (e.g., a menu, a graphic element, or a function), in the virtual reality space, for requesting display on the virtual screen 520.

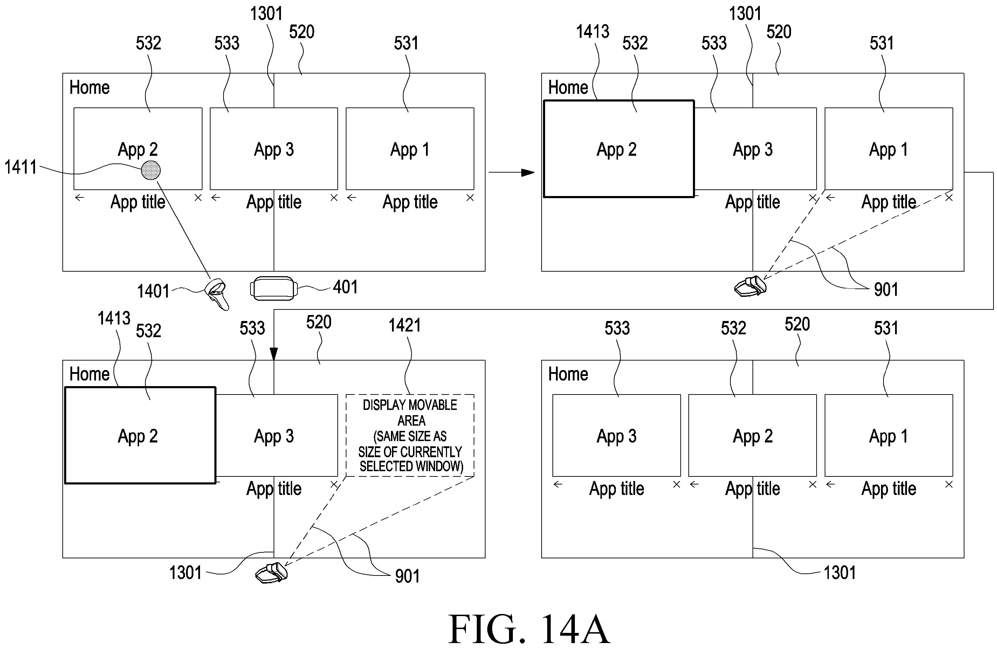

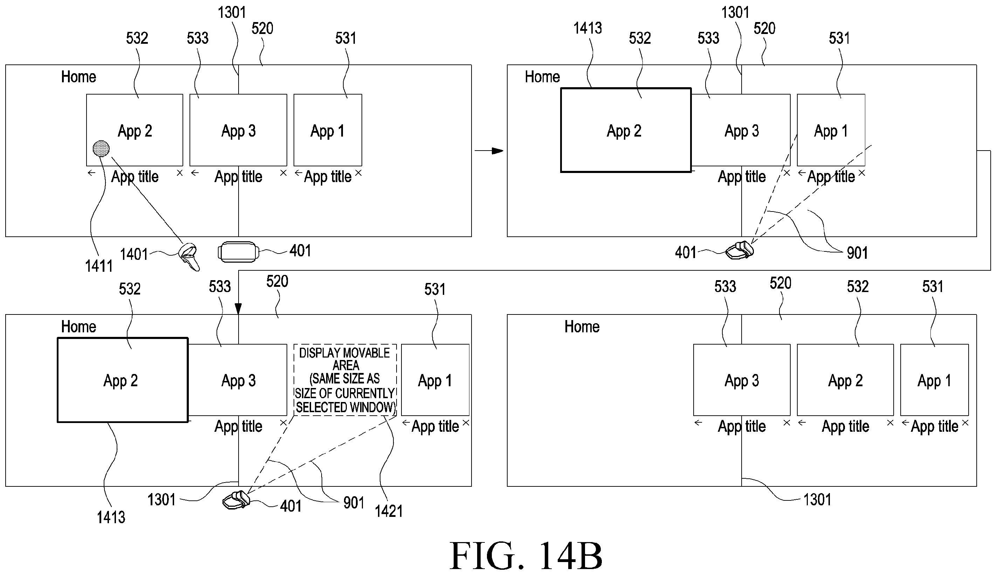

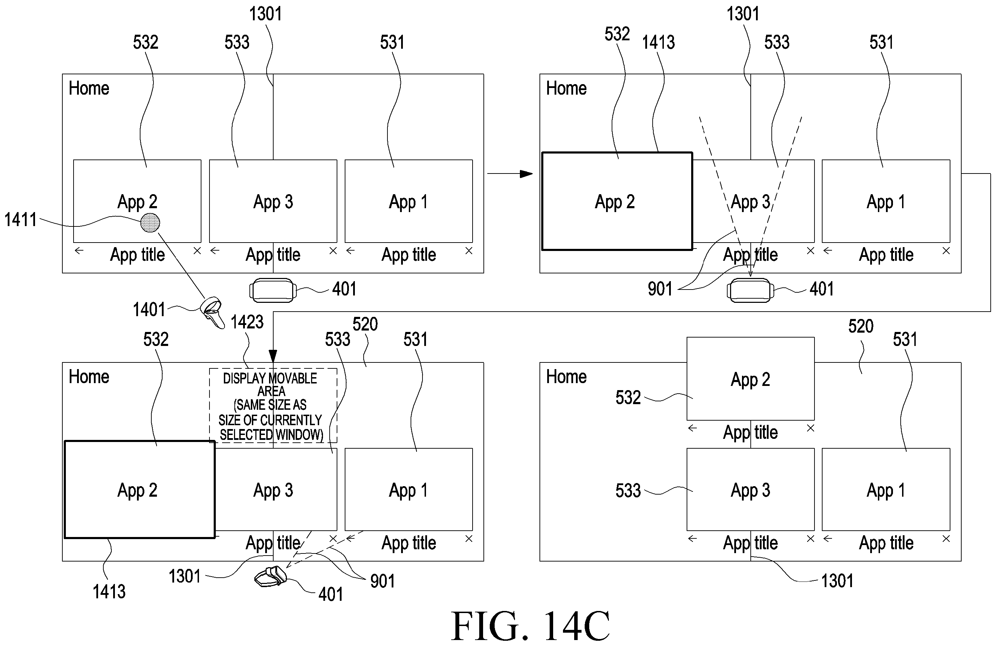

FIGS. 14A, 14B, and 14C are diagrams illustrating examples for changing the arrangement of windows in an electronic device according to an embodiment.

Referring to FIGS. 14A, 14B, and 14C, when the second window 532, one of a plurality of windows, is selected by a handler (e.g., controller) 1401 or a user gesture while the plurality of windows 531, 532, and 533 are displayed on the virtual screen 520 without interference (e.g., so as not to overlap), as shown in operation 1205 of FIG. 12, the electronic device 401 (e.g., the electronic device 101 of FIG. 1, the electronic device 202 of FIG. 2, the wearable electronic device 300 of FIGS. 3A to 3C, or the electronic device 401 of FIG. 4) according to an embodiment may display an object 1411 indicating the selection of the second window 532 and a visual effect (e.g., visual affordance) 1413 indicating that the selected second window 532 is movable.

Referring to FIG. 14A, according to an embodiment, the electronic device 401 may track the user's gaze 901, identify a gaze position to which the gaze 901 is directed, and change an arrangement (e.g., arrangement position, arrangement order, or arrangement interval) of the windows 531, 532, and 533 currently displayed on the virtual screen 520 so as to move the second window 532 selected at the gaze position. The electronic device 401 may change (e.g., change to be arranged in a central area between the third window 533 and the first window 511) the arrangement position of the selected second window 531 based on the gaze position. If there is a window displayed at the gaze position, the electronic device 401 may move the corresponding window (e.g., the first window 531) and display a movable area 1421 based on the size of the second window 532. If there is no window displayed at the gaze position and there is an empty area, the electronic device 401 may display the movable area 1421 based on the size of the second window 532 in the empty area. Based on the changed arrangement position, the electronic device 401 may move the second window 532 to the movable area 1421, and move and display all of the plurality of windows 531, 532, and 531 so that the selected second window 532 is displayed in a central area defined based on the centerline 1301.

Referring to FIG. 14B, according to an embodiment, the electronic device 401 may track the gaze 901 of the user to identify a position to which the gaze 901 is directed and change an arrangement order of the currently displayed windows 531, 532, and 533 on the virtual screen 520 so as to display the second window 532 selected at the position to which the gaze 901 is directed. The electronic device 401 may change the arrangement position of the selected second window 531 (e.g., change the arrangement position to be arranged between the third window 533 and the first window 511), based on the gaze position. If there is a window displayed at the gaze position, the electronic device 401 may move the corresponding window (e.g., the first window 531) and display the movable area 1421 based on the size of the second window 532. If there is no window displayed at the gaze position and there is an empty area, the electronic device 401 may display the movable area 1421 based on the size of the second window 532 in the empty area. Based on the changed arrangement position, the electronic device 401 may move and display the second window 532 in the movable area 1421 without changing but maintaining the arrangement position of the third window 533 displayed in the central area. In this case, if the empty area for displaying the moved first window 531 is smaller than the size of the first window 531, the size of the first window 531 may be reduced for display, or the first window 531 may be deleted.

Referring to FIG. 14C, according to an embodiment, the electronic device 401 may track the user's gaze 901, identify a gaze position to which the gaze 901 is directed, and change the arrangement position of the second window 532 so as to display the selected second window 532 in the gaze position (e.g., an upper area based on a centerline). The electronic device 401 may identify whether there is a window displayed at the gaze position, and if the gaze position is an empty area, the electronic device 401 may display the movable area 1423 based on the size of the second window 532. Based on the changed arrangement position, the electronic device 401 may move and display the second window 532 in the movable area 1423 while maintaining the arrangement positions of the remaining windows (e.g., the first window 531 and the third window 533) without being changed. If the empty area of the gaze position is smaller than the size of the second window 532 and is large enough to be above a specified ratio, the electronic device 401 may move and display the remaining windows (e.g., the first window 531 and the third window 533) to an empty area in a direction opposite to the gaze position to secure an area capable of displaying the second window 532.

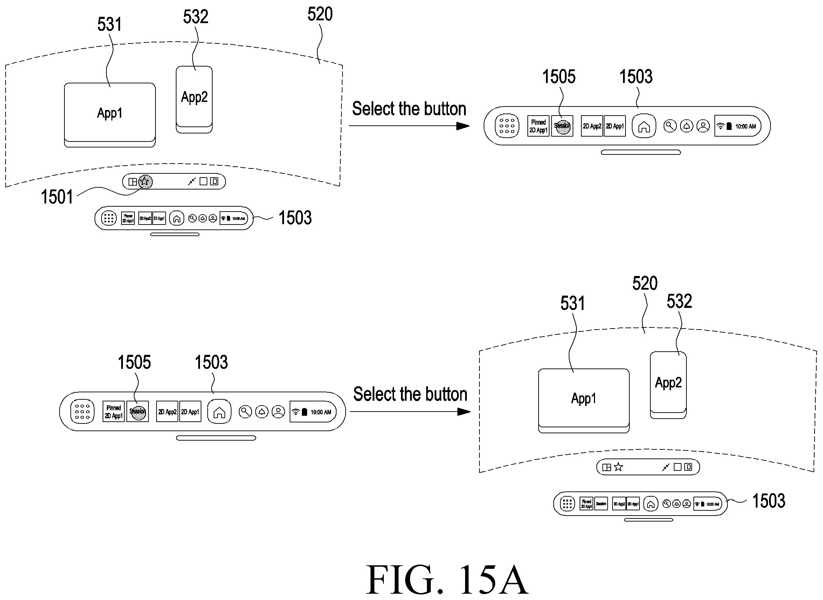

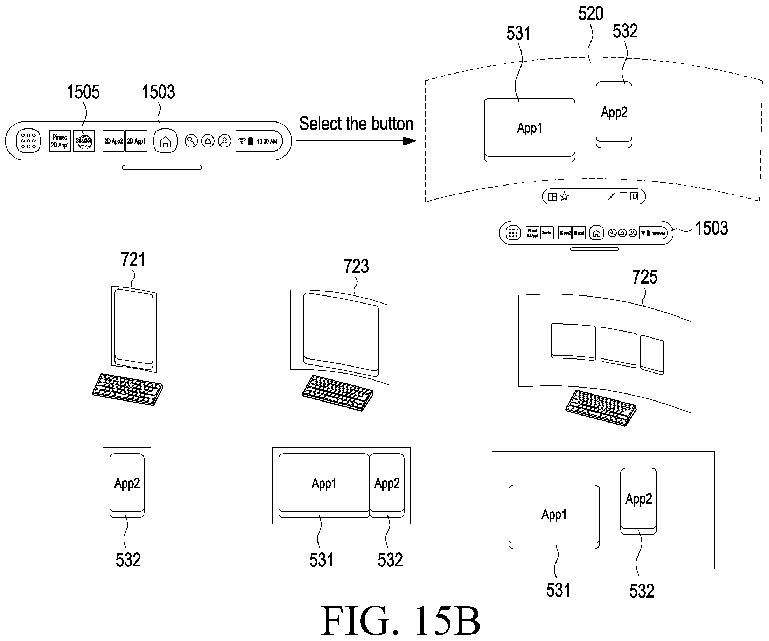

FIGS. 15A and 15B are diagrams illustrating examples for changing the arrangement of windows in an electronic device according to an embodiment.

Referring to FIGS. 15A and 15B, when the virtual screen 520 is terminated, as shown in operation 1209 of FIG. 12, the electronic device 401 (e.g., the electronic device 101 of FIG. 1, the electronic device 202 of FIG. 2, the wearable electronic device 300 of FIGS. 3A to 3C, or the electronic device 401 of FIG. 4) according to an embodiment may store the execution state information of the current virtual screen 520 in memory (e.g., the memory 130 of FIG. 1 or the memory 450 of FIG. 4) according to a user request or automatically. The electronic device 401 may display an object (e.g., a menu, a graphic element, or a function) 1501 for storing execution state information of the virtual screen 520 in a virtual reality space. The electronic device 401 may display a menu screen 1503 displayed in an area adjacent to the virtual screen 520, and may display an object 1505 indicating execution state information stored in the menu screen 1503. Here, the object 1501 may be separately displayed or included in an object including context menus. The execution state information of the virtual screen 520 may include at least one of the size, distance, or type of the virtual screen 520, and at least one of the sizes, arrangement positions, arrangement intervals, or identification information of applications corresponding to the plurality of windows (e.g., the first window 531 and the second window 532) currently displayed on the virtual screen 520.

As shown in FIG. 15A, the electronic device 401 according to an embodiment may store execution state information of the virtual screen 520 when the object 1501 is selected by a user. When re-executing the virtual screen 520, if selecting the object 1505 indicating execution state information from the menu screen 1503 displayed in the virtual reality space, the electronic device 401 may re-execute the virtual screen 520 in the previous execution state based on the execution state information and display the plurality of windows on the re-executed virtual screen 520.

As shown in FIG. 15B, when re-executing the virtual screen 520, the electronic device 401 according to an embodiment may change the type of the virtual screen 520 based on user context information (e.g., the current context). For example, when the external electronic device 403 to be linked is, for example, a mobile phone, the electronic device may change the virtual screen type to the first type 721, display the virtual screen in the size configured for the first type 721, adjust the size of the first window 531 among the plurality of windows 530 to minimize the empty area on the virtual screen 520, and delete the second window 532, which is the remaining window. Afterwards, when it is identified that a change in arrangement is required, the electronic device 401 may display the second window 532 on the virtual screen and delete the first window 531. When the external electronic device 403 to be linked is, for example, a tablet, the electronic device 401 may change the virtual screen type to the second type 723, display the virtual screen 520 in the size configured for the second type 723, and display the plurality of windows 531 and 532 on the virtual screen after adjusting the sizes of the plurality of windows 531 and 532 or adjusting the arrangement intervals. For example, when it is identified that the first window 531 is to be displayed as it is without being resized and the second window 532, which is the remaining window, is to be deleted and an arrangement changed is required, the electronic device 401 may display the second window 532 on the virtual screen 520 and delete the first window 531. When the external electronic device 403 to be linked is, for example, a PC, the electronic device 401 may change the virtual screen type to the third type 725 and display the virtual screen 520 in the size configured for the third type 725. Since the third type 725 is the same as the type information included in the execution state information obtained from memory, the electronic device 401 may display the plurality of windows 531 and 532 on the virtual screen without interference in the previous execution state based on the obtained execution state information.

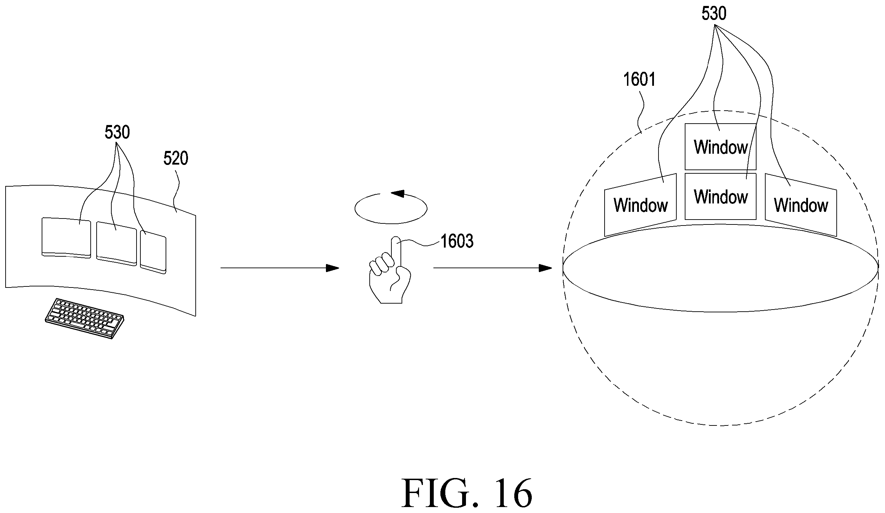

FIG. 16 is a diagram illustrating an example for executing multiple virtual screens in an electronic device according to an embodiment.

When a specified specific gesture 1603 is input, the electronic device (e.g., the electronic device 101 of FIG. 1, the electronic device 202 of FIG. 2, the wearable electronic device 300 of FIGS. 3A to 3C, or the electronic device 401 of FIG. 4) according to an embodiment may expand the virtual screen 520 being used by a user to the entire area of a virtual reality space 1601 (e.g., the virtual reality space 510 of FIGS. 4 and 11) and display the plurality of windows 530 included in the virtual screen 520 in the virtual reality space 1601.

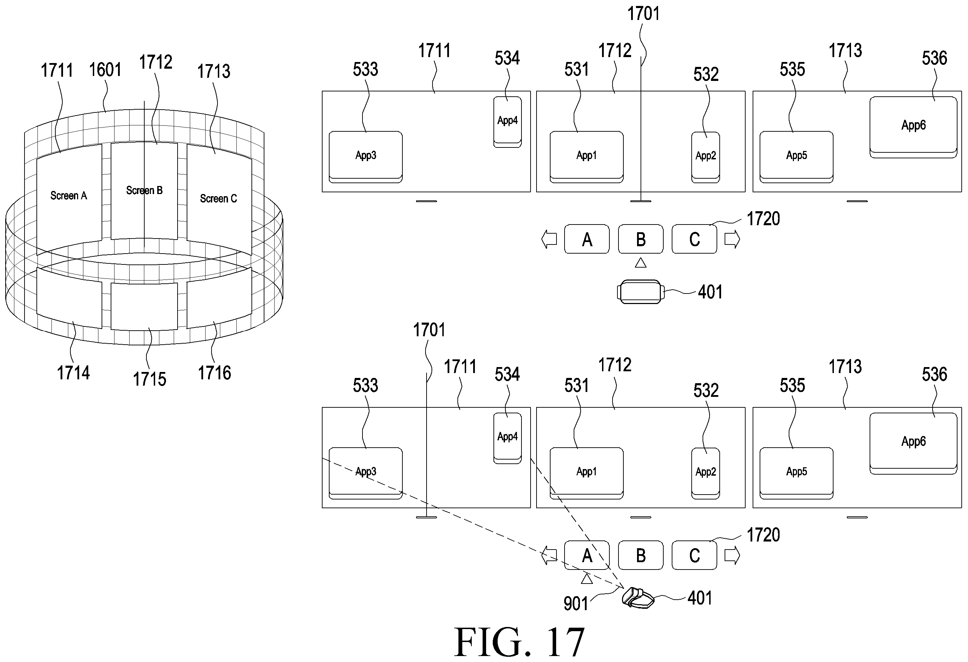

FIG. 17 is a diagram illustrating an example for executing multiple virtual screens in an electronic device according to an embodiment.

Referring to FIG. 17, when executing multiple virtual screens, the electronic device 401 (e.g., the electronic device 101 of FIG. 1, the electronic device 202 of FIG. 2, the wearable electronic device 300 of FIGS. 3A to 3C, or the electronic device 401 of FIG. 4) according to an embodiment may display the multiple virtual screens 1711, 1712, and 1713 executed in the virtual reality space 1601. The electronic device 401 may display the multiple virtual screens 1711, 1712, and 1713 within the user's field of view, and may arrange other virtual screens 1714, 1715, and 1716, which are additionally executed, in other space areas outside the user's field of view. The electronic device 401 may display one or more windows executed in each of the multiple virtual screens 1711, 1712, and 1713 in each of the multiple virtual screens 1711, 1712, and 1713, respectively. The electronic device 401 may arrange the multiple virtual screens 1711, 1712, and 1713 in a specified arrangement criterion. For example, the most recently executed virtual screen (e.g., 1712) may be arranged at the central position of the virtual reality space 1601, and the remaining virtual screens 1711, 1713 to 1716 may be arranged in the left and right areas based on the central position in the order of most recent execution. For example, the virtual reality screens may be arranged to match a user context, based on the user context information.

According to an embodiment, the electronic device 401 may display a user interface (UI) 1720 including objects representing the virtual screens 1711 to 1716 in the form of a list that may be moved to the left/right (e.g., a mini map). If the user's gaze 901 moves to the first virtual screen 1711, which is a virtual screen in a different position outside a central position defined based on a centerline 1701 and remains there for a specified time, the electronic device 401 may display the centerline 1701 on the first virtual screen 1711.

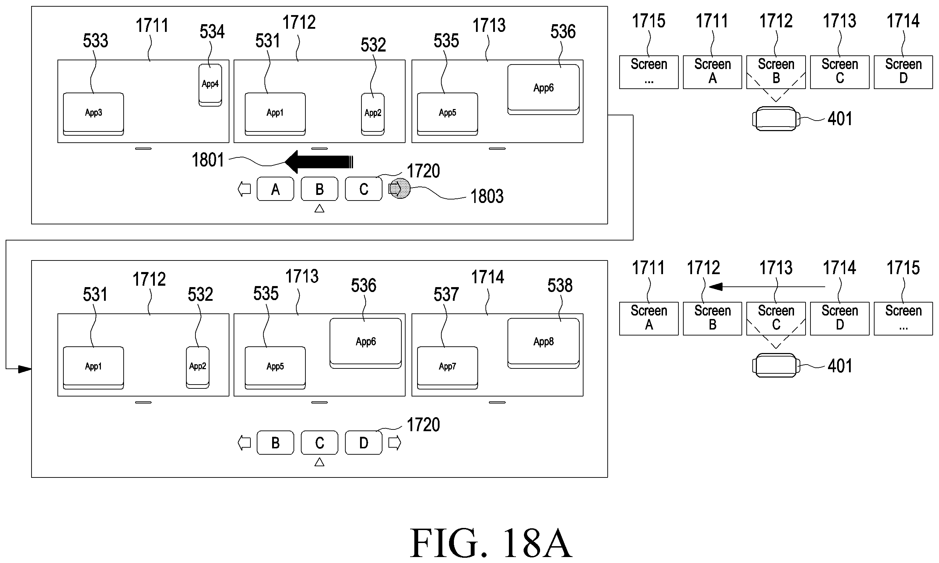

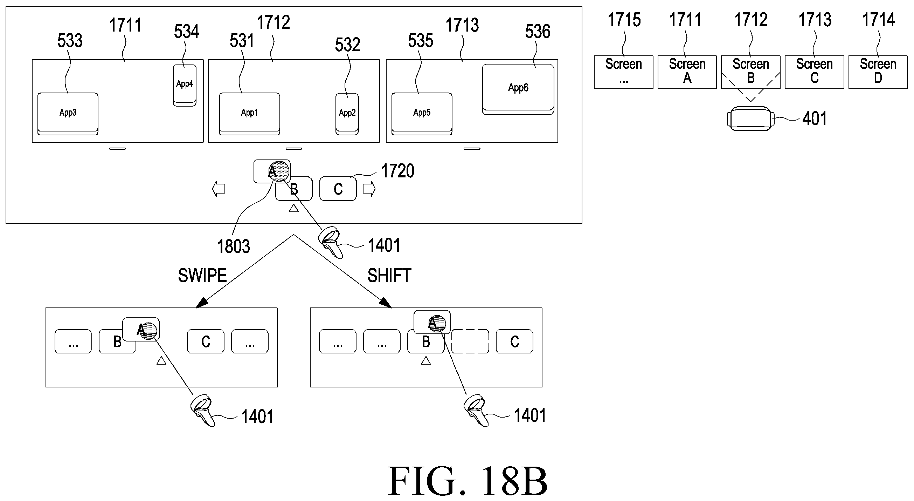

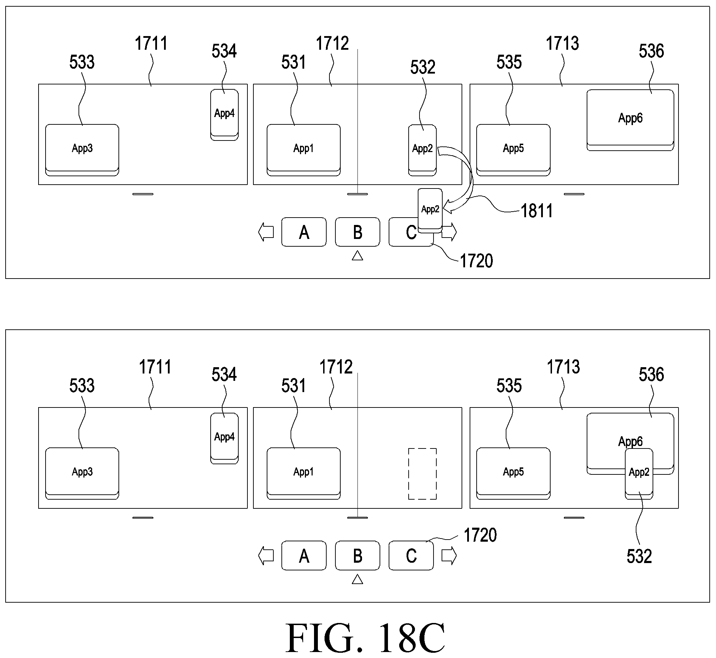

FIGS. 18A, 18B, and 18C are diagrams illustrating examples for executing multiple virtual screens in an electronic device according to an embodiment.

Referring to FIG. 18A, when executing multiple virtual screens 1711, 1712, 1713, 1714, and 1715, the electronic device 401 (e.g., the electronic device 101 of FIG. 1, the electronic device 202 of FIG. 2, the wearable electronic device 300 of FIGS. 3A to 3C, or the electronic device 401 of FIG. 4) according to an embodiment may display the currently running virtual screen 1712 among running multiple virtual screens 1711, 1712, 1713, 1714, and 1715 in the virtual reality space 1601 within the user's field of view, and display the remaining virtual screens 1711, 1713, 1714, and 1715 outside the field of view. The first virtual screen 1711 may include the plurality of windows 531 and 532, the second virtual screen 1712 may include the plurality of windows 533 and 534, the third virtual screen 1713 may include the plurality of windows 535 and 536, and the fourth virtual screen 1714 may include the plurality of windows 537 and 538. According to an embodiment, the electronic device 401 may display the user interface (UI) 1720 including objects (e.g., A, B, C, and D) representing each of the virtual screens 1711, 1712, 1713, 1714, and 1715 in the form of a list that may be moved to the left/right (e.g., a mini map). Here, the field of view may be a range of a virtual reality space in which a user wearing the electronic device 401 does not find it inconvenient to move the user's head up/down or left/right, based on the user's field of view. The electronic device 401 may, for example, move and display the virtual screen (third virtual screen (screen C) 1713) to a central position to which the user's gaze 901 is directed, as the user interface (UI) 1720 is moved in the left direction 1801.

Referring to FIG. 18B, when an object A corresponding to a virtual screen (e.g., a first virtual screen 1711) is selected (1803) by a user in the user interface 1720 through the handler 1401, the electronic device 401 may change the arrangement position of the object A to a central position through a swipe or a shift, move an object B corresponding to a virtual screen (e.g., the second virtual screen 1712) displayed in a central position to another position and move the object A to the central position for display. Accordingly, as the object A and object B are moved and arranged in different positions, the electronic device 401 may move and display the first virtual screen 1711 corresponding to the object A to a central position in the virtual reality space, and move and display the second virtual screen 1712 corresponding to the object B displayed at the central position to another position.

Referring to FIG. 18C, the electronic device 401 according to an embodiment may move and display at least one window included in each of the virtual screens 1711, 1712, and 1713 displayed within the user's field of view between the virtual screens 1711, 1712, and 1713. For example, the electronic device 401 may move (1811) the window 532 to an object C corresponding to the third virtual screen 1713 included in the user interface UI 1720 to display the window 532 included in the second virtual screen 1712 on another virtual screen (e.g., the third virtual screen 1713). In this case, the electronic device 401 may change the arrangement positions of the plurality of windows so that the plurality of windows displayed on the third virtual screen 1713, in which the window 532 is moved, are arranged without interference with each other.

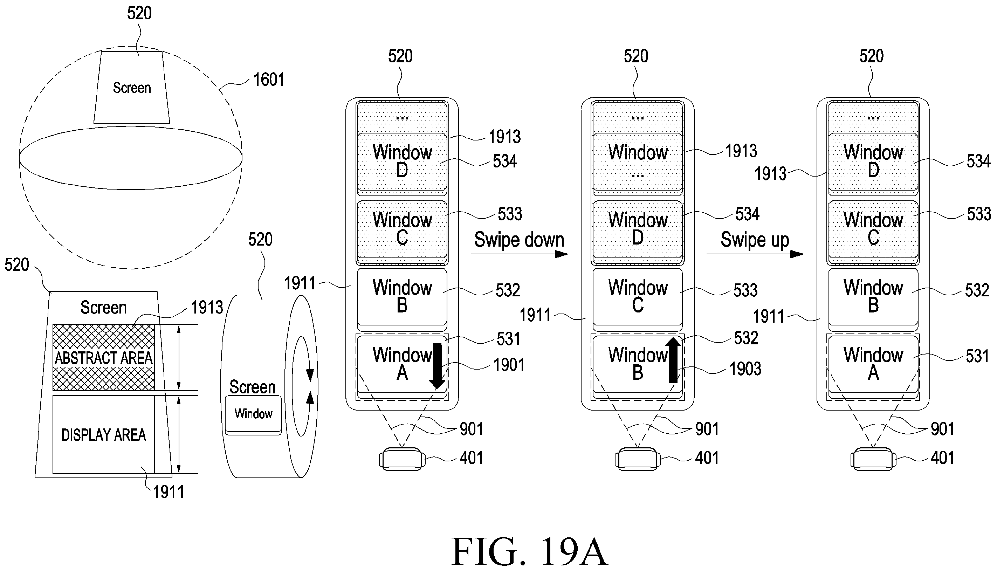

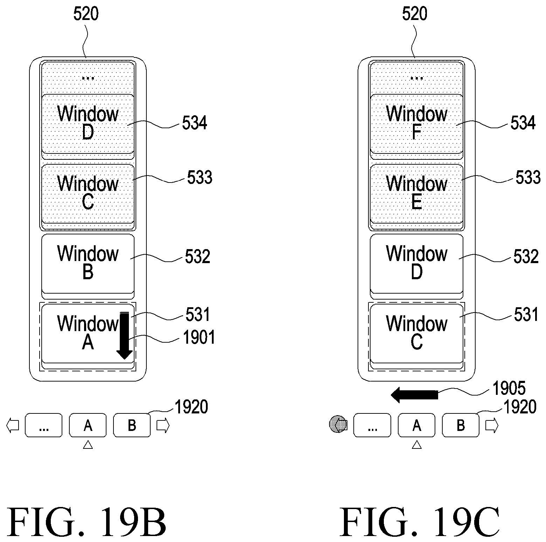

FIGS. 19A, 19B, and 19C are diagrams illustrating examples for managing a plurality of windows in an electronic device according to an embodiment.

Referring to FIG. 19A, the electronic device 401 (e.g., the electronic device 101 of FIG. 1, the electronic device 202 of FIG. 2, the wearable electronic device 300 of FIGS. 3A to 3C, or the electronic device 401 of FIG. 4) according to an embodiment may provide a plurality of virtual screens in the virtual reality space 1601. The electronic device 401 may expand the size in the y-axis direction (e.g., the upper/lower side) when arranging the multiple virtual screens in the x-axis direction (e.g., the left/right side). As the virtual screen 520 expands in size in the y-axis direction (e.g., the upper/lower side), the electronic device 401 may configure an area in the user's field of view as a display area 1911, and configure an area exceeding the field of view (FoV) range as an abstract area 1913. Here, the field of view may be a range of a virtual reality space in which a user wearing the electronic device 401 does not find it inconvenient to move the user's head up/down or left/right, based on the user's field of view. The electronic device 401 may move the plurality of windows 531, 532, 533, and 534 included in the virtual screen 520 upward and downward (1901, 1903) so as to display a specific window in a central area to which the user's gaze 901 is directed. The electronic device 401 may display a visual effect (e.g., a dim effect, a blur effect, a gray-out effect, a gradation, a shadow effect, transparency adjustment, or a highlight) in the abstract area 1913 that is out of the user's field of view.

Referring to FIGS. 19B and 19C, according to an embodiment, the electronic device 401 may move the plurality of windows 531, 532, 533, and 534 up/down 1901 or left/right 1905 by a user, and may display a user interface 1920 including objects representing each of the plurality of windows 531, 532, 533, and 534. The electronic device 401 may move (e.g., swipe or scroll) the plurality of windows included in the expanded virtual screen 520 by using the user interface 1920.

In an embodiment, while virtual windows are displayed on a virtual screen (or in a virtual reality space), the electronic device 401 (e.g., the electronic device 101 of FIG. 1, the wearable electronic device 200 of FIG. 2, the wearable electronic device 300 of FIGS. 3A and 3C and/or the electronic device 410 of FIG. 4) may arrange or change the arrangement of the virtual windows by a specific button (e.g., a menu, a function, a graphic element, or an object) provided in the virtual reality space or a specific input from an external electronic device without selecting at least one window or an object corresponding to at least one window among the virtual windows. When a specific button or a specific input is received, the electronic device may arrange or change the arrangement of the virtual windows under a different arrangement condition than in the case of selecting a window or an object corresponding to the window. As an example, when a specific button or a specific input is received, the electronic device may arrange the virtual windows 530 with intervals between them in the Z-axis direction based on the user's gaze. Here, the intervals between the virtual windows 530 may be configured to be constant with a specified distance value, or may be configured to different distance values. For example, the electronic device may configure the interval from wide interval to narrow interval or from narrow interval to wide interval from the window arranged at the front based on the user's gaze. For example, the electronic device may change a distance value of a specific window (e.g., a window in which a notification or an alert has occurred) to a larger distance value than the distance value configured for the remaining windows, and may arrange the windows with a widened interval. Without being limited thereto, the interval may be variously configured. According to an embodiment, when at least one of the virtual windows 530 arranged in the Z-axis direction based on the gaze is selected, the electronic device may adjust (e.g., reflect or configure) intervals between the remaining windows in the Z direction, based on a Z-axis direction distance value (e.g., a predetermined distance value or a distance value adjusted by a user interaction) configured for the at least one selected window.

According to an embodiment, an operation method of an electronic device (e.g., the electronic device 101 of FIG. 1, the electronic device 202 of FIG. 2, the wearable electronic device 300 of FIGS. 3A to 3C, or the electronic device 401 of FIG. 4) may include controlling the display (e.g., the display module 160 of FIG. 1, the display member 201 of FIG. 2, the display 321 of FIG. 3B, or the display 420 of FIG. 4) of the electronic device to display a virtual screen in a virtual reality space.

According to an embodiment, the operation method of the electronic device may include executing a plurality of windows of at least one application and selecting a first window among the plurality of windows based on user context information.

According to an embodiment, the operation method of the electronic device may include, based on an arrangement condition configured using the user context information, arranging and displaying the selected first window in a specified area on the virtual screen, and arranging and displaying other windows among the plurality of windows without overlapping with the first window in a remaining area of the virtual screen.

According to an embodiment, the method may further include changing at least one of a size of the virtual screen, a distance between the user and the virtual screen, or a type of the virtual screen.

According to an embodiment, the arrangement condition may be a condition for configuring a size, an arrangement position, or an arrangement interval of the plurality of windows based on the user context information or execution state information of the virtual screen stored in the memory (e.g., the memory 130 of FIG. 1 or the memory 450 of FIG. 4) of the electronic device.

According to an embodiment, the user context information may include at least one of gaze information, distance information, motion information, user input information, frequently used pattern information, or information of a connected external electronic device.

According to an embodiment, the specified area may be a central area of the virtual screen that is specified based on a field of view of the user when the user wearing the electronic device gazes forward.

According to an embodiment, the method may further include, while displaying the plurality of windows on the virtual screen, based on a new application being executed, arranging a new window of the new application in the central area of the virtual screen and changing an arrangement of the plurality of windows so as to display the plurality of windows without interference with the new window.

According to an embodiment, the method may further include tracking a gaze of a user using at least one camera circuit (e.g., the camera module 251 of FIG. 2 or the camera circuit 430 of FIG. 4) of the electronic device, identifying a gaze position on the virtual screen and, based on the gaze position being outside the central area of the virtual screen, changing an arrangement position of a first window, among the plurality of windows, displayed at the gaze position to the central area.

According to an embodiment, the method may further include displaying an object for moving the first window displayed at the gaze position to the central area, based on the gaze being maintained in another area outside the central area for a specified time.

According to an embodiment, the method may further include, based on the gaze moving after selecting one of the plurality of windows, displaying an area of the virtual screen corresponding to the moved gaze position as a movable area of the selected window, changing arrangement positions of the plurality of windows to move the selected window to the movable area, and displaying the selected window in the central area based on the changed arrangement positions of the plurality of windows.

According to an embodiment, the method may further include storing execution state information of the virtual screen in the memory of the electronic device in response to a request to terminate the virtual screen.

According to an embodiment, the execution state information may include at least one of a size, a distance or a type of the virtual screen and at least one of sizes, arrangement positions, arrangement intervals of the plurality of windows or identification information of applications corresponding to the plurality of windows.

According to an embodiment, the method may further include obtaining the execution state information from the memory in response to a request for re-execution of the virtual screen and re-executing the virtual screen and displaying the plurality of windows based on the execution state information.

7 According to an embodiment, the method may further include, based on displaying the plurality of virtual screens in the virtual reality space, displaying virtual screen objects representing each of the plurality of virtual screens in the virtual reality space and displaying a first virtual screen, among the plurality of virtual screens, displayed at a gaze position toward which the gaze of the user is directed, at a central position in the virtual reality space.

According to an embodiment, the displaying the first virtual screen at the central position may further include changing an arrangement of the plurality of virtual screens to display the plurality of virtual screens without overlapping.

According to an embodiment, in a non-transitory storage medium storing at least one program, the at least one program, when executed by at least one processor (e.g., the processor 120 of FIG. 1 or the processor 410 of FIG. 4) of an electronic device (e.g., the electronic device 101 of FIG. 1, the electronic device 202 of FIG. 2, the wearable electronic device 300 of FIGS. 3A to 3C, or the electronic device 401 of FIG. 4), may include instructions cause the electronic device to control the display (e.g., the display module 160 of FIG. 1, the display member 201 of FIG. 2, the display 321 of FIG. 3B, or the display 420 of FIG. 4) of the electronic device to display a virtual screen in a virtual reality space, execute a plurality of windows of at least one application and select a first window among the plurality of windows based on user context information, and arrange and display the selected first window in a specified area on the virtual screen and display the plurality of windows on the virtual screen without overlapping between the plurality of windows of the at least one application based on an arrangement condition configured using the user context information.

According to the above-described embodiment, the electronic device may display a virtual screen according to a user context in a virtual reality space, and automatically arrange and display a plurality of windows on the virtual screen according to the user context, thereby reducing inconvenience in using the virtual screen by the user. In addition, various effects that may be identified directly or indirectly through the disclosure may be provided. The effects that may be obtained in the disclosure are not limited to those mentioned above, and other effects not mentioned may be clearly understood by those skilled in the art from the following description.

The embodiments disclosed herein have been provided for the purpose of describing and understanding the technical content, and are not intended to limit the scope of the technology disclosed herein. Therefore, the scope of the disclosure should be construed as including all changes or various other embodiments based on the technical idea of the disclosure.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (100, 200, 300, 401) comprising:
a display (160, 201, 321, 420);
memory (130, 450) storing instructions; and
at least one processor (120, 410) including processing circuitry,
wherein the instructions, when executed by the at least one processor individually or collectively, cause the electronic device to:
control the display to display a virtual screen in a virtual reality space;
execute a plurality of windows of at least one application and select a first window among the plurality of windows based on user context information; and
based on an arrangement condition set using the user context information, control the display to arrange and display the selected first window in a specified area on the virtual screen, and arrange and display other windows among the plurality of windows without overlapping with the first window in a remaining area of the virtual screen.

2. The electronic device of claim 1, wherein the instructions, when executed by the at least one processor individually or collectively, cause the electronic device to:
change at least one of a size of the virtual screen, a distance between a user and the virtual screen, or a type of the virtual screen;
wherein the arrangement condition is a condition for setting a size, an arrangement position, or an arrangement interval of the plurality of windows based on the user context information or execution state information of the virtual screen stored in the memory; and
wherein the user context information includes at least one of gaze information of the user, distance information of the user, motion information of the user, user input information, frequently used pattern information, or information of a connected external electronic device.

3. The electronic device of claim 1 or claim 2,
wherein the specified area is a central area of the virtual screen that is specified based on a field of view of the user when the user wearing the electronic device gazes forward, and
wherein the instructions, when executed by the at least one processor individually or collectively, cause the electronic device to:
while displaying the plurality of windows on the virtual screen, based on a new application being executed, arrange a new window of the new application in the central area of the virtual screen, and change an arrangement of the plurality of windows so as to display the plurality of windows without interference with the new window.

4. The electronic device of any one of claim 1 to claim 3, wherein the instructions, when executed by the at least one processor individually or collectively, cause the electronic device to:
track a gaze of the user using at least one camera circuit (251, 430) of the electronic device;
identify a gaze position on the virtual screen; and
based on the gaze position being outside the central area of the virtual screen, change an arrangement position of a first window, among the plurality of windows, displayed at the gaze position to the central area.

5. The electronic device of any one of claim 1 to claim 4, wherein the instructions, when executed by the at least one processor individually or collectively, cause the electronic device to:
based on the gaze being maintained in another area outside the central area for a specified time, control the display to display an object for moving the first window displayed at the gaze position to the central area.

6. The electronic device of any one of claim 1 to claim 5, wherein the instructions, when executed by the at least one processor individually or collectively, cause the electronic device to:
based on the gaze moving after selecting one of the plurality of windows, display an area of the virtual screen corresponding to the moved gaze position as a movable area of the selected window;
change arrangement positions of the plurality of windows to move the selected window to the movable area;
based on the changed arrangement positions of the plurality of windows, control the display to display the selected window in the central area;
in response to a request for terminate the virtual screen, store execution state information of the virtual screen in the memory;
in response to a request for re-execution of the virtual screen, obtain the execution state information from the memory; and
based on the execution state information, re-execute the virtual screen and control the display to display the plurality of windows, and
wherein the execution state information includes at least one of a size, a distance or a type of the virtual screen and at least one of sizes, arrangement positions, arrangement intervals of the plurality of windows or identification information of applications corresponding to the plurality of windows.

7. The electronic device of any one of claim 1 to claim 6, wherein the instructions, when executed by the at least one processor individually or collectively, cause the electronic device to:
based on displaying a plurality of virtual screens in the virtual reality space, control the display to display virtual screen objects representing each of the plurality of virtual screens in the virtual reality space;
control the display to display a first virtual screen, among the plurality of virtual screens, displayed at a gaze position toward which the gaze of the user is directed, at a central position in the virtual reality space; and
when displaying the first virtual screen at the central position, change an arrangement of the plurality of virtual screens to display the plurality of virtual screens without overlapping.

8. An operation method performed by an electronic device (100, 200, 300, 401), the method comprising:
controlling a display (160, 201, 321, 420) of the electronic device to display a virtual screen in a virtual reality space;
executing a plurality of windows of at least one application, and selecting a first window among the plurality of windows, based on user context information; and
based on an arrangement condition configured using the user context information, arranging and displaying the selected first window in a specified area on the virtual screen, and arranging and displaying other windows among the plurality of windows without overlapping with the first window in a remaining area of the virtual screen.

9. The method of claim 8, further comprising changing at least one of a size of the virtual screen, a distance between a user and the virtual screen, or a type of the virtual screen,
wherein the arrangement condition is a condition for configuring a size, an arrangement position, or an arrangement interval of the plurality of windows, based on the user context information or execution state information of the virtual screen stored in a memory (130, 450); and
wherein the user context information includes at least one of gaze information, distance information, motion information, user input information, frequently used pattern information, or information on a connected external electronic device.

10. The method of claim 8 or claim 9, wherein the specified area is a central area of the virtual screen that is specified based on a field of view of the user when the user wearing the electronic device gazes forward, and
wherein the method further comprises, while displaying the plurality of windows on the virtual screen, based on a new application being executed, arranging a new window of the new application in the central area of the virtual screen, and changing an arrangement of the plurality of windows so as to display the plurality of windows without interference with the new window.

11. The method of one of claim 8 to claim 10, further comprising:
tracking a gaze of the user using at least one camera circuit (251, 430) of the electronic device;
identifying a gaze position on the virtual screen; and
based on the gaze position being outside the central area of the virtual screen, changing an arrangement position of a first window, among the plurality of windows, displayed at the gaze position to the central area.

12. The method of one of claim 8 to claim 11, further comprising, based on the gaze being maintained in another area outside the central area for a specified time, displaying an object for moving the first window displayed at the gaze position to the central area.

13. The method of one of claim 8 to claim 12, further comprising:
based on the gaze moving after selecting one of the plurality of windows, displaying an area of the virtual screen corresponding to the moved gaze position as a movable area of the selected window;
changing arrangement positions of the plurality of windows to move the selected window to the movable area; and
based on the changed arrangement positions of the plurality of windows, displaying the selected window in the central area.

14. The method of one of claim 8 to claim 13, further comprising:
in response to a request for termination of the virtual screen, storing execution state information of the virtual screen in the memory;
in response to a request for re-execution of the virtual screen, obtaining the execution state information from the memory; and
based on the execution state information, re-executing the virtual screen and displaying the plurality of windows, and
wherein the execution state information includes at least one of a size, a distance, or a type of the virtual screen and at least one of sizes, arrangement positions, arrangement intervals of the plurality of windows, or identification information of applications corresponding to the plurality of windows.

15. A non-transitory storage medium storing at least one program, wherein the at least one program comprises instructions that, when executed by at least one processor (120, 410) of an electronic device (101, 200, 300, 401), cause the electronic device to:
control a display (160, 201, 321, 420) of the electronic device to display a virtual screen in a virtual reality space;
execute a plurality of windows of at least one application, and select a first window among the plurality of windows, based on user context information; and
based on an arrangement condition configured using the user context information, arrange and display the selected first window in a specified area on the virtual screen, and display the plurality of windows on the virtual screen without overlapping between the plurality of windows of the at least one application.
